# EUROPÄISCHE PATENTSCHRIFT

(11) **EP 2 956 864 B1**
(45) Veröffentlichungstag und Bekanntmachung des Hinweises auf die Patenterteilung: **12.04.2017**
(21) Anmeldenummer: 13785815.5
(22) Anmeldetag: 22.08.2013
(51) Int. Cl.: G06F 13/40, G06F 13/42, H04L 12/40

(54) **ISOBUS-KONNEKTOREN**
ISOBUS CONNECTORS
CONNECTEURS ISOBUS

(30) Priorität: 14.02.2013 DE 202013001373 U
(43) Veröffentlichungstag der Anmeldung: 23.12.2015
(73) Patentinhaber: Anedo Ltd., 49406 Eydelstedt (DE)
(72) Erfinder: MÖLLER, Andreas, 49424 Goldenstedt-Lutten (DE)
(74) Vertreter: Springorum, Harald
(86) Internationale Anmeldenummer: PCT/DE2013/000474
(87) Internationale Veröffentlichungsnummer: WO 2014/124615

(56) Entgegenhaltungen:
- DE-A1- 19 904 090
- "ISO 11783 Part 2: Physical Layer - Amendment 1", 1. April 2006 (2006-04-01), ISO, XP002718615, Seite 4
- "ISO 11783 Part 2: Physical Layer", 15. April 2002 (2002-04-15), ISO, XP002718611, das ganze Dokument

## Beschreibung

Die vorliegende Erfindung betrifft ISOBUS-Konnektoren zum Anschluß von ISOBUS-Geräten, vorzugsweise ISOBUS-Steuergeräten (ISOBUS ECU) an einen ISOBUS in der Kabine.

Der ISOBUS (genormt durch die ISO 11783) ist ein für Kraftfahrzeuge, insbesondere Land- und Baumaschinenfahrzeuge geeigneter und verwendeter Kommunikationsbus, der auf dem CAN-Bus (CAN ~ Controller Area Network) basiert.

Im Rahmen des ISOBUS können diverse Steuergeräte mit zugehörigen Maschinen, also etwa Bodenbearbeitungsmaschinen etc., aber auch entsprechende Bedienterminals - etwa für vorgenannte Maschinen - auf einem gemeinsamen Bus zusammengefaßt werden.

Für den Anschluß von ISOBUS-Geräten, wie etwa Bedienterminals in der Kabine des verwendeten Fahrzeugs, also etwa in der Kabine eines Traktors, sieht die ISO 11783 zu ihrem Teil 2 (Part 2) eine Ergänzung 1 (Amendment 1) vor, die einen optionalen Kabinen-Konnektor beschreibt. Derartige Kabinen-Konnektoren erlauben es dabei etwa ein oder mehrere elektronische Steuergeräte, wie etwa Bedienterminals in der Kabine des Fahrzeugs - etwa des Traktors oder auch der Baumaschine - an den ISOBUS mittels eines Buchse-Stecker-Systems anzuschließen.

Hierbei ist jedoch grundsätzlich zu beachten, daß die Anschlußlänge vom elektronischen Steuergerät bis zum ISOBUS im Falle eines echten, vom ISOBUS zum elektronischen Steuergerät geführten Leitungsstiches weniger als 1 m betragen darf, anderenfalls es aufgrund von Leitungsreflexionen zu Störungen auf dem ISOBUS kommen kann (vgl. ISO 11783-2, First Edition, Amendment 1, 01.04.2006, dort zu Gliederungspunkt B.11.5).

Eine Anschlußlänge von < 1 m ist bereits für nur ein einziges elektronisches Steuergerät in der Kabine nicht einfach einzuhalten und so bedarf es hier einer Lösung, die auch Anschlußlängen von mehr als 1 m erlaubt.

Die Lösung hierzu wird im Wege einer Durchleitungsverkabelung (sogenanntes *loop-through*, vgl. wiederum ISO 11783-2, First Edition, Amendment 1, 01.04.2006, dort zu Gliederungspunkt B.11.5) erreicht, wozu der jeweilige Kabinen-Konnektor nach der ISO 11783 Norm folgende Anschlußbelegung vorsieht:
- Pin 1:: Elektrische Leitung - **ECU_PWR CON -** zur Übertragung eines - bei Herstellung einer elektrischen Verbindung mit der Stromversorgungsleitung **- ECU_PWR** - für elektronische Steuergeräte zur Schalteransteuerung - vorzugsweise zur Ansteuerung zumindest eines Relais - dienenden Steuersignals;
- Pin 2:: negatives CAN-Datenbus-Differenzsignal - **CAN**_**L** - am Eingang der Durchleitung (*input*);
- Pin 3:: negatives CAN-Datenbus-Differenzsignal - **CAN**_**L** - am Ausgang der Durchleitung (*output*);
- Pin 4:: positives CAN-Datenbus-Differenzsignal - **CAN**_**H** - am Eingang der Durchleitung (*input*);
- Pin 5:: positives CAN-Datenbus-Differenzsignals - **CAN_H** - am Ausgang der Durchleitung (*output*);
- Pin 6:: eine der Stromversorgung für eine automatische Abschlußschaltung dienende Stromversorgungsleitung - **TBC_PWR** -;
- Pin 7:: eine der Stromversorgung des elektronischen Steuergerätes dienende Stromversorgungsleitung - **ECU_PWR** -;
- Pin 8:: eine der zumindest automatischen Abschlußschaltung dienende Masseleitung - **TBC_GND** -; und
- Pin 9:: eine dem elektronischen Steuergerät dienende - vorzugsweise galvanisch getrennte - Masseleitung - **ECU_GND** -.

In diesem Zusammenhang sei zu der vorerwähnten automatischen Abschlußschaltung (sogenannter *Termihating Bias Circuit - TBC)* gesagt, daß der ISOBUS für Anbaugeräte an dem sogenannten *BUS-Breakway*-Konnektor die vorstehend bereits erwähnte automatische Abschlußwiderstandsschaltung (*TBC*) vorsieht, die vermittels eines Signals außer Betrieb gesetzt werden kann. Dieser Mechanismus spielt im hier beschriebenen Zusammenhang eines Kabinen-Konnektors jedoch nur insoweit eine Rolle, als daß hier die entsprechende Stromversorgung und der entsprechende Masseanschluß für die automatische Abschlußschaltung auch auf dem Kabinen-Konnektor des ISOBUS geführt werden (vgl. vorstehend Pin 6 und Pin 8).

Die vorstehende doppelte Belegung der CAN_H und CAN_L-Signale, jeweils als Eingangs- und als Ausgangssignal ermöglicht nun die vorstehend bereits erwähnte Durchleitungslösung *(loopthrnugh*), die für den Anschluß eines elektronischen Steuergerätes einen echten Leitungsstich - der ja stets auf unter 1 m Länge begrenzt wäre - zu vermeiden hilft, indem die Leitungen für die Datenleitungssignale CAN_H und CAN_L auf der einen Seite (*input*) einmal zum elektronischen Steuergerät hin und auf der anderen Seite (*output*) wieder von diesem weg geführt werden. Eine solche Anschlußtechruk ermöglicht es dann - freilich um den Preis der doppelten Leitungsführung - die 1 m Längenbegrenzung für unmittelbare Anschlußstiche an den ISOBUS im Ergebnis zu umgehen (Anmerkung: in der Anschlußverkabelung des elektronischen Steuergerätes, das ja die doppelte Verkabelung aufweist, wird der 1 m Maximalabstand natürlich eingehalten, indem dort der tatsächliche Leitungsstich zum Gerät entsprechend kurz gehalten wird).

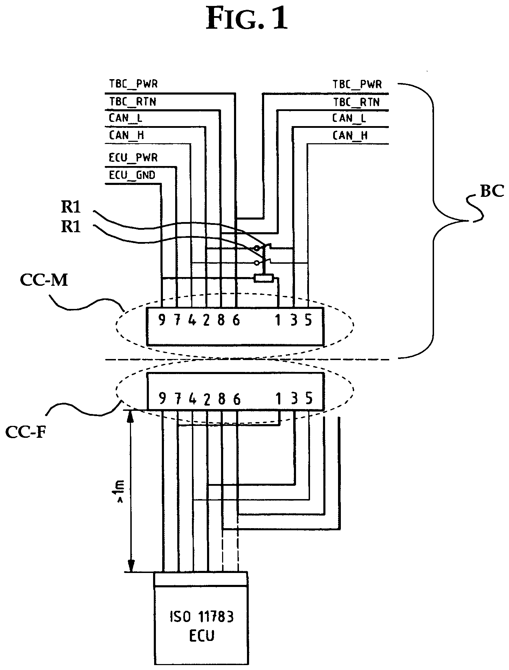

Nähere Details zu dieser Lösung nach dem Stand der Technik finden sich in **Fig.1**, die einen Ausschnitt der Figur B.12 aus der ISO 11783-2 enthält (siehe ISO 11783-2, First Edition, Amendment 1, 01.04.2006, dort S. 4) und diese technische Lösung näher erläutert.

Die vorerwähnte Lösung nach dem Stand der Technik ist jedoch aufwendig, da sie für den Fall, daß kein elektronisches Steuergerät mit dem Kabinen-Konnektor verbunden ist, eine elektrische oder elektronische Schaltung aufweisen muß, die in diesem Falle eine interne Brücke in dem Kabinen-Konnektor zwischen den Datenleitungen für die Signale CAN_H und CAN_L der einen Seite (*input*) und für diejenigen der anderen Seite (*output*) schaltet, anderweitig das Durchleitungsprinzip für den Fall der Lösung einer Steckverbindung nicht mehr funktioniert.

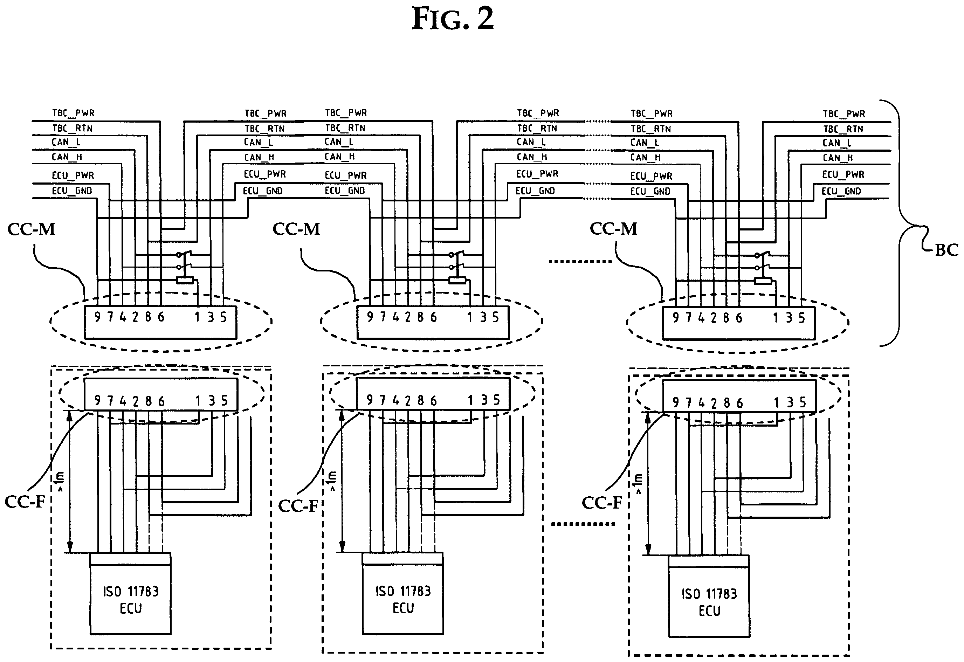

Noch aufwendiger ist es allerdings auf diese Art und Weise mehrere elektronische Steuergeräte - etwa mehrere Bediengeräte - an den Kabinen-Konnektor eines ISOBUS anzuschließen: Will man dies tun und kann - wie häufig aufgrund der Platzverhältnisse in der Fahrzeugkabine oder aufgrund eines ansonsten hohen Verkabelungsaufwandes für eine Kabinenringleitung - die 1 m-Grenze für Leitungsstiche vom ISOBUS bis zum Anschluß der elektronischen Steuergeräte nicht einhalten, so muß man die vorerwähnte Durchleitungsverkabelung in kaskadierter Form anwenden, was aber zu einer Vielzahl von Kabinen-Konnektoren führt und verkabelungstechnisch ebenfalls sehr aufwendig ist, muß doch die jeweilige Leitung am Ausgang der Durchleitung von einem Kabinen-Konnektor kommend wieder als Eingangsleitung für den nächsten Kabinen-Konnektor zur Durchleitung dort verwendet werden (vgl. hierzu Fig. 2, die den Stand der Technik für den Fall des Anschlusses mehrerer elektronischer Steuergeräte an den Kabinen-Konnektor des ISOBUS zeigt, wenn die Anschlußlänge nicht auf unter 1 m begrenzt ist).

Ausgehend von diesem Stand der Technik ist es daher Aufgabe der Erfindung, Bauteile für einen ISOBUS-Anschluß in der Kabine eines Fahrzeugs zu schaffen, die einerseits eine Anschlußlänge von einem Meter und größer erlauben, andererseits aber den Verkabelungsaufwand gegenüber dem Stand der Technik vermindern.

Diese Aufgabe wird durch ein Kabinen-Konnektorbauteil nach Anspruch 1 und einen hiermit zusammenwirkenden Endkonnektor nach Anspruch 15 oder Anspruch 16 gelöst.

Die vorliegende Erfindung löst dabei das ihr zugrunde liegende Problem dadurch, daß sie ein Kabinen-Konnektorbauteil vorschlägt, das einerseits kaskadierbar - mithin also unmittelbar oder mittelbar (d.h. auch etwa mittels eines Zwischenstücks) mit sich selbst mechanisch und elektrisch verbindbar - ist und so auch beim Anschluß mehrerer elektronischer Steuergeräte den Verkabelungsaufwand reduziert, andererseits aber die Möglichkeit der Wahl einer Anschlußlänge auch von einem Meter und größer offenhält, indem es sich der bereits der aus dem Stand der Technik bekannten Durchleitungstechnik für die beiden Datenleitungen für die Signale CAN_H und CAN_L bedient.

Die Kaskadierbarkeit wird jedoch erst dadurch möglich, daß das Kabinen-Konnektorbauteil selbst zunächst für eine elektrische Trennung zwischen den Leitungen für die Datenleitungssignale CAN_H und CAN_L in unterschiedlichen Abschnitten der Verdrahtung sorgt.

Dies allein reicht jedoch nicht aus, da das Kabinen-Konnektorbauteil hierdurch zwar kaskadierbar wird, zugleich aber die Datenverbindung auf dem Bus unterbrochen wäre. Daher ist nach der vorliegenden Erfindung ein weiteres Bauteil vorgesehen, nämlich ein Endkonnektor, der in seiner Ausführungsform nach Anspruch 15 im Zusammenwirken mit dem jeweilig letzten kaskadierten Kabinen-Konnektorbauteil als Abschlußstück verbunden wird und durch seine eigene innere Kontaktierung dann am Ende der Kaskade die elektrische Verbindung zwischen den Datenleitungen zweier Abschnitte herstellt und so die Funktionsfähigkeit des ISOBUS ermöglicht. In seiner Ausführungsform nach Anspruch 16 stellt er im Zusammenwirken mit einem jeweiligen dritten Kabinen-Konnektor zur Verbindung mit einem Abzweig des erfindungsgemäßen Kabinen-Konnektorbauteils wiederum durch seine eigene innere Kontaktierung dann etwa auf dem Weg der Kaskade die elektrische Verbindung zwischen den Datenleitungen zweier vorzugsweise in der Kaskade aufeinanderfolgender Abschnitte her und ermöglicht damit ebenso die Funktionsfähigkeit des ISOBUS. Ist die Kontaktbelegung (etwa die Pinbelegung oder Kontaktbuchsenbelegung) des ersten und des dritten Kabinen-Konnektors des erfindungsgemäßen Kabinen-Konnektorbauteils gleich und sind beide gleichartig, etwa jeweils als Stecker oder als Buchse ausgestaltet, so kann der erfindungsgemäße Endkonnektor sowohl mit dem ersten Kabinen-Konnektor, als auch dem dritten Kabinen-Konnektor des erfindungsgemäßen Kabinen-Konnektorbauteils verbunden werden, um dort seine Funktion, also die elektrische Verbindung der Datenleitungen **CAN_H** und **CAN_L** in aufeinanderfolgenden im erfindungsgemäßen Konnektor-Bauelement elektrisch getrennten Leitungsabschnitten gemäß der vorliegenden Erfindung zu erfüllen.

Zweckmäßige Ausführungsformen und Weiterbildungen ergeben sich dabei aus den Unteransprüchen 2 bis 14 und dem Unteranspruch 17, wobei Anspruch 2 eine zweckmäßige Anordnung der wesentlichen Teile des erfindungsgemäßen Kabinen-Konnektorbauteils betrifft.

Anspruch 3 betrifft den Fall, daß als erfindungsgemäßes Kabinen-Konnektorbauteil ein solches Verwendung findet, bei dem ein Kabel als Abzweig aus dem Kabinen-Konnektorbauteil heraus und zu der elektronischen Steuereinheit hin (oder von dieser her zum Kabinen-Konnektorbauteil) führt.

Die Ansprüche 4 bis 8 betreffen die Anordnung der übrigen Leitungen des ISOBUS im Rahmen des erfindungsgemäßen Kabinen-Konnektorbauteils.

Die Ansprüche 9 bis 12 sehen vor, daß das erfindungsgemäße Kabinen-Konnektorbauteil als Stecker-Stecker, als Stecker-Buchse, als Buchse-Stecker und auch als Buchse-Buchse-System ausgestaltet sein kann, je nachdem, welche Verbindungstechnik - möglicherweise auch unter Verwendung von Zwischen- oder Adapterstücken - bevorzugt wird.

Anspruch 13 betrifft den Fall, daß als erfindungsgemäßes Kabinen-Konnektorbauteil ein solches Verwendung findet, bei dem, etwa statt des bereits erwähnten, direkt aus dem Kabinen-Konnektorbauteil herausführenden Kabels als Abzweig, der dritte Kabinen-Konnektor - vorzugsweise an der Seite des Kabinen-Konnektorbauteils - vorgesehen ist, der etwa wiederum als Stecker oder auch als Buchse ausgebildet sein kann. An einen solchen Konnektor kann dann wieder ein Kabel mit eigenem Konnektorgegenstück angeschlossen werden, das selbst wiederum auf der anderen Seite etwa mit dem jeweilig zu verbindenden elektronischen Steuergerät verbunden ist. In einem solchen Fall ist das Kabinen-Konnektorbauteil vor dieser Schnittstelle zum dritten Kabinen-Konnektor vorzugsweise so aufgebaut, wie es auch die Schnittstelle nach der Fig. **1** ist. Im Inneren des Kabinen-Konnektorbauteils ist dann eine Relaisschaltung - wie auch in Fig. 1 zu sehen - vorgesehen, deren Schaltkontakte für die Datenleitungen CAN_L und CAN_H im Falle einer externen Verbindung mit dem dritten Kabinen-Konnektor innerhalb des Kabinen-Konnektorbauteil unterbrochen werden, womit die Datenleitungen dann aus dem Kabinen-Konnektorbauteil heraus über den dritten Kabinen-Konnektor hin zum elektronischen Steuergerät und von diesem zurück wieder über den dritten Konnektor in das Kabinen-Konnektorbauteil herein geleitet werden.

Anspruch 14 betrifft die Kaskadierbarkeit des Kabinen-Konnektorbauteils.

Anspruch 17 verhält sich darüber, daß auch der erfindungsgemäße Endkonnektor als Buchse oder Stecker ausgebildet werden kann.

Die Unteransprüche 18 bis 22 betreffen Konnektorelemente, die jeweils aus einem Kabinen-Konnektorbauteil und einem zugehörigen Endkonnektor bestehen, wobei beide Teile mechanisch miteinander, vorzugsweise mittels einer Kupplung oder dergleichen, etwa aus flexiblem oder halbflexiblem Kunststoff, verbunden sind, damit etwa der Endkonnektor nicht verloren geht. Vorteilhafterweise kann die Befestigung am Endkonnektor etwa am Kopf seiner Kappe und die am Kabinen-Konnektorbauteil an dessen Seite erfolgen.

Die vorliegende Erfindung ermöglicht es so in platzsparender Weise ohne aufwendige Verkabelung eine ganze Reihe von ISOBUS-Anschlüssen auch in der Fahrzeugkabine vorzusehen, und zwar ohne, daß wesentliche längenmäßige Begrenzungen der Anschlußleitungen beachtet werden müssen.

Im folgenden werden nicht einschränkend zu verstehende Ausführungsbeispiele anhand der Zeichnung besprochen. In dieser zeigen:
- Fig. **1**: einen Ausschnitt der Figur B.12 aus der ISO 11783-2 zum Anschluß eines elektronischen Steuergeräts mit mehr als 1 m Abstand zum bestehenden ISOBUS nach dem Stand der Technik (siehe ISO 11783-2, First Edition, Amendment 1, 01.04.2006, dort S. 4),
- Fig. **2**: wie nach der Lösung aus dem Stand der Technik entsprechend Fig. **1** mehrere elektronische Steuergeräte - etwa mehrere Bediengeräte - an den Kabinen-Konnektor eines ISOBUS in der Fahrzeugkabine anzuschließen sind, wenn die Anschlußlänge auch hierbei nicht auf unter 1 m begrenzt sein soll,
- Fig. **3**: eine Ausführungsform eines erfindungsgemäßen Kabinen-Konnektorbauteils mit einem Abzweig über ein Kabel unmittelbar zu dem jeweiligen elektronischen Steuergerät und einen zugehörigen erfindungsgemäßen Endkonnektor,
- Fig. **4**: eine weitere Ausführungsform eines Kabinen-Konnektorbauteils nach der vorliegenden Erfindung, bei dem der Abzweig zu und von dem dritten Kabinen-Konnektor des Kabinen-Konnektorbauteils führt,
- Fig. **5**: ein Konnektorelement mit einem erfindungsgemäßen Kabinenkonnektor-Bauteil mit einem als Kappe ausgebildeten verbundenen Endkonnektor nach der vorliegenden Erfindung,
- Fig. **6**: das Konnektorelement nach Fig. **5** mit nicht-verbundenem Endkonnektor nach der vorliegenden Erfindung,
- Fig. **7**: das Konnektorelement nach Fig. **5** und **6**, nun ohne Endkonnektor und mit dem zweiten Kabinen-Konnektor des Kabinenkonnektor-Bauteils nach oben gerichtet,
- Fig. **8**: drei kaskadierte Kabinenkonnektor-Bauteile mit jeweiligem Abzweig und aufgeschraubter, also mechanisch und elektrisch verbundener Endkonnektorkappe auf dem nach oben gerichteten Kabinenkonnektor-Bauteil,
- Fig. **9**: einen als Buchse ausgestalteten Kabinen-Konnektor mit Lage und Nummerierung der jeweiligen Kontakte (Pins) entsprechend dem ISOBUS, und
- Fig. **10**: einen als Stecker ausgestalteten Kabinen-Konnektor mit der Lage der jeweiligen Kontakte (Pins) enstprechend dem ISOBUS.

Fig. **1** zeigt einen Ausschnitt der Figur B.12 aus der ISO 11783-2 zum Anschluß eines elektronischen Steuergeräts **ECU** mit mehr als 1 m Abstand zum bestehenden ISOBUS nach dem Stand der Technik (siehe ISO 11783-2, First Edition, Amendment 1, 01.04.2006, dort S. 4).

Die Lösung erfolgt hier im Wege einer Durchleitungsverkabelung (sogenanntes *loop-through*, vgl. wiederum ISO 11783-2, First Edition, Amendment 1, 01.04.2006, dort zu Gliederungspunkt B.11.5), wozu der jeweilige Konnektor - hier der Stecker **CC-M** - nach der ISO 11783 Norm die bereits erwähnte doppelte Datenkabelbelegung für das negative CAN-Datenbus-Differenzsignal - **CAN_L** wie auch das positive CAN-Datenbus-Differenzsignal - **CAN**_**H** und zwar auf
- Pin 2: das negative CAN-Datenbus-Differenzsignal - **CAN**_**L** - am Eingang der Durchleitung (*input*) *-* hier auf der linken Seite oben zu sehen;
- Pin 3: das negative CAN-Datenbus-Differenzsignal - **CAN**_**L** - am Ausgang der Durchleitung (*output*) - hier auf der rechten Seite oben zu sehen;
- Pin 4: das positive CAN-Datenbus-Differenzsignal - **CAN**_**H** - am Eingang der Durchleitung (*input*) *-* hier wiederum auf der linken Seite oben zu sehen;
- Pin 5 :: das positive CAN-Datenbus-Differenzsignal - **CAN_H** - am Ausgang der Durchleitung (*output*) - hier wiederum auf der rechten Seite oben zu sehen;
(Wegen der übrigen Leitungsbelegung sei ergänzend auf die in der allgemeinen Beschreibungseinleitung angeführte Pinbelegung verwiesen!)

Die vorstehende doppelte Belegung für die Signale **CAN_H** und **CAN**_**L**, jeweils als Eingangs- und als Ausgangssignal ermöglicht die bereits erwähnte Durchleitungslösung (*loop-through*), die für den Anschluß eines elektronischen Steuergerätes einen echten Leitungsstich - der ja stets auf unter 1 m Länge begrenzt wäre - vermeidet, indem die Leitungen für die Datenleitungssignale **CAN_H** und **CAN_L** - hier auf der linken Seite - einmal zum elektronischen Steuergerät hin und - hier auf der rechten Seite - wieder von diesem weg geführt werden. Eine solche Anschlußtechnik ermöglicht es, um den Preis der doppelten Datenleitungsführung die 1 m Längenbegrenzung für unmittelbare Anschlußstiche an den Kabinen-ISOBUS **BC** im Ergebnis zu umgehen. Das elektronische Steuergerät **ECU** wird hier nämlich mittels eines Kabels mit einem Konnektorgegenstück - hier mittels der Buchse **CC**-**F** - mit dem Konnektor - hier dem Stecker **CC-M** - verbunden. Durch die hiervon - in der Darstellung hier nach unten abgehende - Anschlußverkabelung des elektronischen Steuergerätes **ECU**, die die doppelte Datenverkabelung aufweist, wird der 1 m Maximalabstand natürlich eingehalten, indem dort der tatsächliche Leitungsstich zum Gerät entsprechend kurz gehalten ist.

Fig. **2** zeigt wie nach der Lösung aus dem Stand der Technik nach Fig. **1** mehrere elektronische Steuergeräte **ECU** - etwa mehrere Bediengeräte - an den Konnektor **CC-M** eines ISOBUS in der Fahrzeugkabine **BC** anzuschließen sind, wenn dies jeweils über einen Steckanschluß geschehen und die Anschlußlänge auch hierbei nicht auf unter 1 m begrenzt sein soll. Man muß in diesem Falle die in Fig. **1** vorerwähnte Durchleitungsverkabelung in kaskadierter Form verwenden, was in der vorliegenden Darstellung zu sehen ist. Dies führt aber zu einer Vielzahl von Konnektoren **CC-M,** was verkabelungstechnisch sehr aufwendig ist, muß doch die jeweilige Leitung - etwa **CAN_L**, **CAN_H** - am Ausgang der Durchleitung von einem Konnektor **CC-M** kommend wieder als Eingangsleitung für den nächsten Konnektor **CC-M** zur Durchleitung dort verwendet werden. Der Anschluß der jeweiligen **ECU** erfolgt dann - genau wie im Fall der Fig. **1**- hier über eine Buchse **CC-F** als Konnektorgegenstück zum Konnektor (hier dem Stecker **CC-M)** mittels eines Kabels, das die Datenleitungen wiederum doppelt führt. Erst das allerletzte Stück zum Anschluß des elektronischen Steuergerätes **ECU** ist dann als kurzer (< 1m) echter Leitungsstich ausgeführt, um die physikalische Busspezifikation des ISOBUS einzuhalten. Der für eine solche Erweiterung notwendige, vorstehend beschriebene Aufwand macht überdeutlich, warum in der Fahrzeugkabine (also etwa der Traktorkabine) in der Regel bauseits üblicherweise nur ein Konnektor (Kabinen-Konnektor [InCAB-Connector]) vorgesehen ist. Alternativ zu der hier gezeigte Lösung bietet sich sodann nach dem Stand der Technik allenfalls an, jeweilige Abzweige im Kabelstrang zu verschiedenen elektronischen Steuergeräten **ECU** vorzusehen, was aber ebenfalls verkabelungstechnisch aufwendig und zudem noch unflexibel ist.

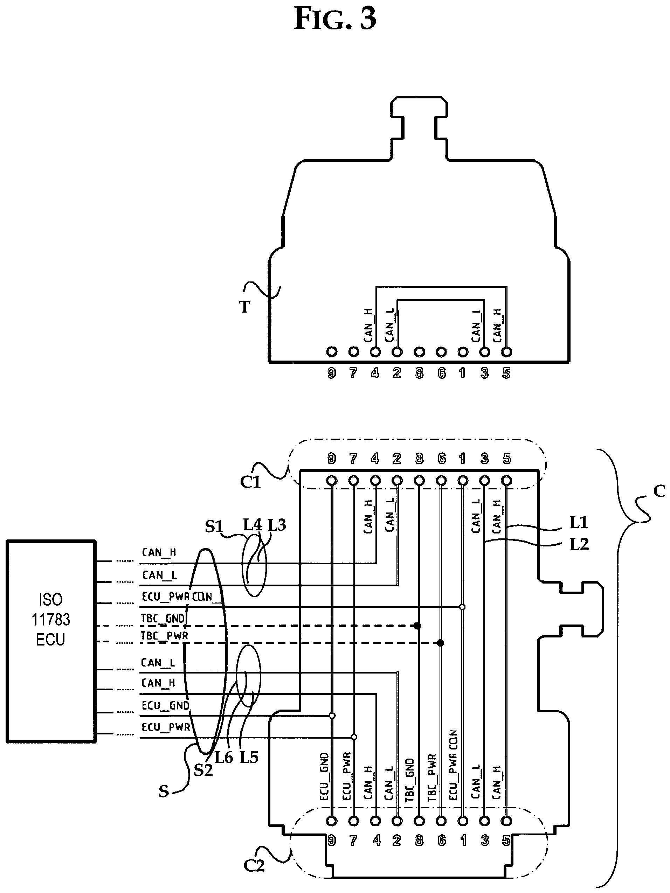

Fig. **3** zeigt eine Ausführungsform eines erfindungsgemäßen Kabinen-Konnektorbauteils **C** mit einem Abzweig **S** über ein Kabel unmittelbar zu dem jeweiligen elektronischen Steuergerät **ECU** und einen zugehörigen erfindungsgemäßen Endkonnektor **T**.

Das Kabinen-Konnektorbauteil **C** zum Anschluß von ISOBUS-Geräten an einen ISOBUS nach dem Standard ISO 11783 weist elektrische Leitungen **L1, L3** und **L5** zur Übertragung eines positiven CAN-Datenbus-Differenzsignals **CAN**_**H** und elektrische Leitungen **L2**, **L4** und **L6** zur Übertragung eines negativen CAN-Datenbus-Differenzsignals **CAN_L** sowie zwei Kabinen-Konnektoren **C1, C2** zur jeweiligen elektrischen und mechanischen Verbindung des Kabinen-Konnektorbauteils **C** mit einem jeweils passenden Konnektorgegenstück - etwa des ersten Kabinen-Konnektors **C1** mit dem Endkonnektor **T** -, und einen Abzweig (**S**) zu und von einem elektronischen Steuergerät **ECU** auf, wobei die elektrischen Leitungen **L1, L3** und **L5** zur Übertragung des positiven CAN-Datenbus-Differenzsignals **CAN**_**H** und die elektrischen Leitungen **L2 L4** und **L6** zur Übertragung des negativen CAN-Datenbus-Differenzsignals **CAN_L** - vorzugsweise innerhalb des Kabinen-Konnektorbauteils **C -** jeweils
- als erste Leitung **L1** zur Übertragung des positiven CAN-Datenbus-Differenzsignals **CAN**_**H** und als zweite Leitung **L2** zur Übertragung des negativen CAN-Datenbus-Differenzsignals **CAN_L** in einem ersten Abschnitt zwischen dem ersten Kabinen-Konnektor **C1** und dem zweiten Kabinen-Konnektor **C2**, und
- als dritte Leitung **L3** zur Übertragung des positiven CAN-Datenbus-Differenzsignals **CAN**_**H** und als vierte Leitung **L4** zur Übertragung des negativen CAN-Datenbus-Differenzsignals **CAN_L** in einem zweiten Abschnitt zwischen dem ersten Kabinen-Konnektor **C1** und dem Abzweig **S**, sowie
- als fünfte Leitung **L5** zur Übertragung des positiven CAN-Datenbus-Differenzsignals **CAN**_**H** und als sechste Leitung **L6** zur Übertragung des negativen CAN-Datenbus-Differenzsignals **CAN_L** in einem dritten Abschnitt zwischen dem Abzweig **S** und dem zweiten Kabinen-Konnektor **C1**
so vorgesehen sind, daß die in dem ersten Abschnitt zwischen dem ersten Kabinen-Konnektor **C1** und dem zweiten Kabinen-Konnektor **C2** verlaufende erste Leitung **L1** für das positive CAN-Datenbus-Differenzsignal **CAN**_**H** von der in dem zweiten Abschnitt zwischen dem ersten Kabinen-Konnektor **C1** und dem Abzweig **S** verlaufenden dritten Leitung **L3** für das positive CAN-Datenbus-Differenzsignal **CAN**_**H** innerhalb des Kabinen-Konnektorbauteils **C** elektrisch getrennt ist, und daß die in dem ersten Abschnitt zwischen dem ersten Kabinen-Konnektor **C1** und dem zweiten Kabinen-Konnektor **C2** verlaufende zweite Leitung **L2** für das negative CAN-Datenbus-Differenzsignal **CAN_L** von der in dem zweiten Abschnitt zwischen dem ersten Kabinen-Konnektor **C1** und dem Abzweig **S** verlaufenden vierten Leitung **L4** für das negative CAN-Datenbus-Differenzsignal **CAN_L** innerhalb des Kabinen-Konnektorbauteils (**C**) elektrisch getrennt ist.

Die zwei Kabinen-Konnektoren **C1, C2** weisen hier eine Vielzahl von Kontakten **1**, **2**, **3**, **4**, **5**, **6**, **7**, **8** und **9** zur jeweiligen elektrischen und mechanischen Verbindung des Kabinen-Konnektorbauteils **C** mit einem jeweils passenden Konnektorgegenstück auf, wobei elektrische Leitungen im Kabinen-Konnektorbauteil **C** zwischen einander jeweils entsprechenden Kontakten des ersten Kabinen-Konnektors **C1** und des zweiten Kabinen-Konnektors **C2** zur Übertragung elektrischen Stroms - vorzugsweise elektrischer Signale des ISOBUS - vorgesehen sind, hier nämlich die Leitungen zwischen den Kontakten **1**, **3**, **5**, **6**, **7**, **8** und **9**, also jeweils die Leitung
zur Übertragung eines - bei Herstellung einer elektrischen Verbindung mit der Stromversorgungsleitung - **ECU_PWR** - für elektronische Steuergeräte zur Schalteransteuerung - vorzugsweise zur Ansteuerung zumindest eines Relais - dienenden Steuersignals - Elektrische Leitung - **ECU_PWR CON** -;
für das negative CAN-Datenbus-Differenzsignal - **CAN_L** - am Ausgang einer Durchleitung (*output*);
für das positive CAN-Datenbus-Differenzsignal - **CAN**_**H** - am Ausgang der Durchleitung (*output*);
für die Stromversorgung einer automatischen Abschlußschaltung - **TBC_PWR** -;
für die Stromversorgung des elektronischen Steuergerätes - **ECU_PWR** -;
für die Masse der automatischen Abschlußschaltung - **TBC_GND** -; und
für die - vorzugsweise galvanisch getrennte - Masse für das elektronische Steuergerät - **ECU**_**GND**-.

Der Abzweig **S** des Kabinen-Konnektorbauteils **C**, der hier unmittelbar über ein Kabel zu und von dem elektronischen Steuergerät **ECU** führt, weist selbst
- einen ersten Leitungsabzweig **S1** vom ersten Kabinen-Konnektor **C1** des Kabinen-Konnektorbauteils **C** zur elektrischen Verbindung des ersten Kabinen-Konnektors **C1** des Kabinen-Konnektorbauteils **C** mit dem jeweiligen elektronischen Steuergerät **ECU** auf, und zwar mit elektrischen Leitungen **L3** und **L4** in dem zweiten Abschnitt zwischen dem ersten Kabinen-Konnektor **C1** des Kabinen-Konnektorbauteils C und dem elektronischen Steuergerät **ECU** zur Übertragung elektrischen Stroms - vorzugsweise elektrischer Signale des ISOBUS, hier insbesondere
   - der dritten - von der ersten elektrischen Leitung zur Übertragung des positiven CAN-Datenbus-Differenzsignals **L1** innerhalb des Kabinen-Konnektorbauteils **C** elektrisch getrennten - elektrischen Leitung **L3** zur Übertragung des positiven CAN-Datenbus-Differenzsignals **CAN_H,** und
   - der vierten - von der zweiten elektrischen Leitung zur Übertragung des positiven CAN-Datenbus-Differenzsignals **L2** innerhalb des Kabinen-Konnektorbauteils **C** elektrisch getrennten - elektrischen Leitung **L4** zur Übertragung des negativen CAN-Datenbus-Differenzsignals **CAN_L;**
- und einen zweiten Leitungsabzweig **S2** vom dem zweiten Kabinen-Konnektor **C2** des Kabinen-Konnektorbauteils **C** zur elektrischen Verbindung des zweiten Kabinen-Konnektors **C2** des Kabinen-Konnektorbauteils **C** mit dem elektronischen Steuergerät **ECU**, mit elektrischen Leitungen in dem dritten Abschnitt zwischen dem zweiten Kabinen-Konnektor **C2** des Kabinen-Konnektorbauteils **C** und dem jeweiligen elektronischen Steuergerät **ECU** zur Übertragung elektrischen Stroms - vorzugsweise elektrischer Signale des ISOBUS -, hier insbesondere
- der fünften - sowohl von der ersten elektrischen Leitung **L1** zur Übertragung des positiven CAN-Datenbus-Differenzsignals **CAN**_**H**, als auch von der dritten elektrischen Leitung **L3** zur Übertragung des positiven CAN-Datenbus-Differenzsignals **CAN**_**H** jeweils elektrisch getrennten - elektrischen Leitung **L5** zur Übertragung des positiven CAN-Datenbus-Differenzsignals **CAN**_**H**,
- der sechsten - sowohl von der zweiten elektrischen Leitung **L2** zur Übertragung des positiven CAN-Datenbus-Differenzsignals, als auch von der vierten elektrischen Leitung **L4** innerhalb des Kabinen-Konnektorbauteils **C** jeweils elektrisch getrennten - elektrischen Leitung **L6** zur Übertragung des negativen CAN-Datenbus-Differenzsignals **CAN**_**L**.

Auch werden hier Teile der elektrischen Leitungen im Kabinen-Konnektorbauteil **C**, die zwischen einander jeweils entsprechenden Kontakten des ersten Kabinen-Konnektors **C1** und des zweiten Kabinen-Konnektors **C2** zur Übertragung elektrischen Stroms verlaufen, auch über den Abzweig **S** des Kabinen-Konnektorbauteils **C** jeweils auch mit dem elektronischen Steuergerät **ECU** verbunden, nämlich jeweils die Leitung
zur Übertragung eines - bei Herstellung einer elektrischen Verbindung mit der Stromversorgungsleitung - **ECU_PWR** - für elektronische Steuergeräte zur Schalteransteuerung - vorzugsweise zur Ansteuerung zumindest eines Relais - dienenden Steuersignals - Elektrische Leitung - **ECU_PWR CON** -;
für die Stromversorgung des elektronischen Steuergerätes - **ECU_PWR** -;
für die - vorzugsweise galvanisch getrennte - Masse für das elektronische Steuergerät - **ECU_GND-.**

Vorzugsweise kann dies auch jeweils für die Leitung für die Stromversorgung einer automatischen Abschlußschaltung - **TBC_PWR** -, und die Leitung für die Masse der automatischen Abschlußschaltung - **TBC_GND** - vorgesehen sein.

Auch ist hier im oberen Teil der Darstellung ein erfindungsgemäßer Endkonnektor **T** zu sehen, der als passendes Konnektorgegenstück zur elektrischen und mechanischen Verbindung mit dem ersten Kabinen-Konnektor **C1** des Kabinen-Konnektorbauteils **C** nach der vorliegenden Erfindung dient, wobei der Endkonnektor **T**, wenn er mit dem Kabinen-Konnektorbauteil **C** nach der vorliegenden Erfindung elektrisch verbunden ist, selbst auch eine elektrische Verbindung sowohl zwischen
der in dem ersten Abschnitt zwischen dem ersten Kabinen-Konnektor **C1** und dem zweiten Kabinen-Konnektor **C2** verlaufenden ersten Leitung **L1** für das positive CAN-Datenbus-Differenzsignal **CAN**_**H** und
der in dem zweiten Abschnitt zwischen dem ersten Kabinen-Konnektor **C1** und dem Abzweig **S** verlaufenden dritten Leitung **L3** für das positive CAN-Datenbus-Differenzsignal **CAN**_**H**,
als auch
der in dem ersten Abschnitt zwischen dem ersten Kabinen-Konnektor **C1** und dem zweiten Kabinen-Konnektor **C2** verlaufenden zweiten Leitung **L2** für das negative CAN-Datenbus-Differenzsignal **CAN_L** und
der in dem zweiten Abschnitt zwischen dem ersten Kabinen-Konnektor **C1** und dem Abzweig **S** verlaufenden vierten Leitung **L4** für das negative CAN-Datenbus-Differenzsignal **CAN_L**
herstellt und so die elektrische Trennung zwischen den Leitungen für die Datenleitungssignale **CAN**_**H** und **CAN_L** in dem ersten Abschnitt von denen in dem zweiten Abschnitt aufhebt und so im Wege dieser dann entstehenden Durchleitungsverkabelung eine Datendurchleitung (ein sogenanntes *loop-through*) ermöglicht.

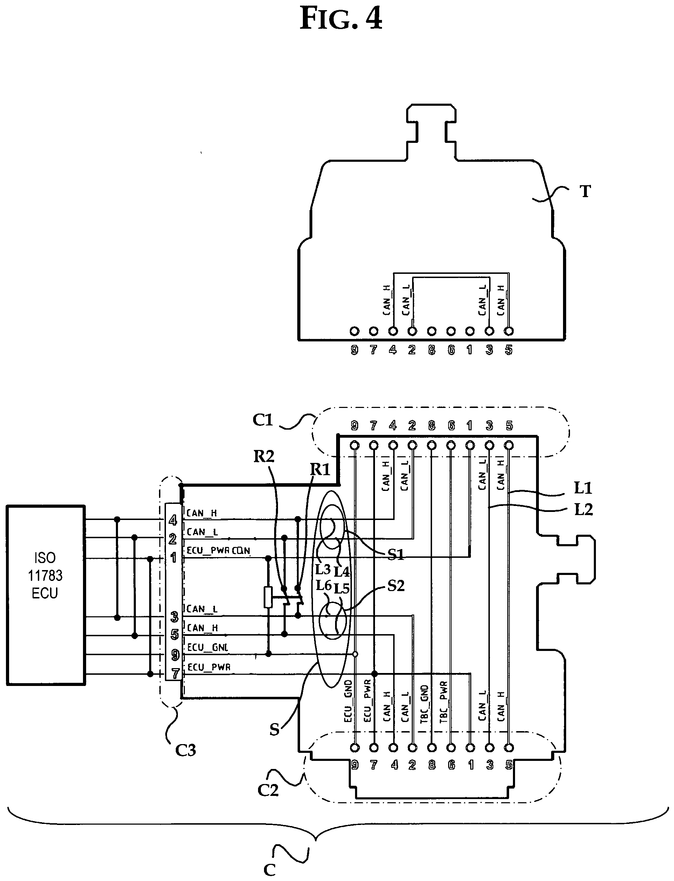

Fig. 4 zeigt eine weitere Ausführungsform eines Kabinen-Konnektorbauteils **C** nach der vorliegenden Erfindung, bei dem der Abzweig **S** zu und von dem dritten Kabinen-Konnektor **C3** des Kabinen-Konnektorbauteils **C** führt.

Hier ist also als erfindungsgemäßes Kabinen-Konnektorbauteil **C** ein solches vorgesehen, bei dem, etwa statt des bereits in Fig. **3** gezeigten, direkt aus dem Kabinen-Konnektorbauteil **C** herausführenden Kabels als Abzweig, der dritte Kabinen-Konnektor **C3 -** vorzugsweise an der Seite des Kabinen-Konnektorbauteils **C -** vorgesehen ist, der etwa wiederum als Stecker oder auch als Buchse ausgebildet sein kann. An einen solchen Kabinen-Konnektor **C3** kann dann wieder ein Kabel mit eigenem Konnektorgegenstück angeschlossen werden, das selbst wiederum auf der anderen Seite etwa mit dem jeweilig zu verbindenden elektronischen Steuergerät **ECU** verbunden ist. In einem solchen Fall ist das Kabinen-Konnektorbauteil **C** vor dieser Schnittstelle zum dritten Kabinen-Konnektor **C3** vorzugsweise so aufgebaut, wie es auch die Schnittstelle nach der Fig. **1** ist. Im Inneren des Kabinen-Konnektorbauteils **C** ist eine Relaisschaltung **R1, R2 -** wie auch in Fig. **1** zu sehen - vorgesehen, deren Schaltkontakte für die Datenleitungen **CAN_L** und **CAN_H** im Falle einer externen Verbindung mit dem dritten Kabinen-Konnektor **C3** innerhalb des Kabinen-Konnektorbauteils **C** unterbrochen werden, womit die Datenleitungen **CAN_L CAN**_**H** dort dann aus dem Kabinen-Konnektorbauteil **C** heraus über den dritten Kabinen-Konnektor **C3** zum elektronsischen Steuergerät **ECU** hin und von diesem zurück wieder über den dritten Kabinen-Konnektor **C3** in das Kabinen-Konnektorbauteil **C** herein geleitet werden. Insbesondere die Verbindung zwischen den Datenleitungen **CAN_L** und **CAN_H** hinter dem dritten Kabinen-Konnektor **C3** kann dabei selbstverständlich auch in dem elektronischen Steuergerät **ECU** hergestellt werden.

Statt, wie im Falle der hier dargestellten, etwas aufwendigen Relaisschaltung **R1, R2 ,** kann der hier dargestellte dritte Kabinen-Konnektor **C3** auch ohne eine solche Relaisschaltung **R1, R2** auskommen, wenn man einen erfindungsgemäßen Endkonnektor **T** auch an dem dritten Kabinen-Konnektor **C3** in dem Falle einsetzt, daß dort gerade keine Verbindung zu einem elektronischen Steuergerät **ECU** besteht. Man steckt dann den entsprechenden erfindungsgemäßen Endkonnektor (vgl. Anspruch 16) in den dritten Konnektor **C3** zur Verbindung der Datenleitungen **CAN_L** und **CAN**_**H** durch das jeweilige erfindungsgemäße Kabinen-Konnektorbauteil hindurch (*loop through*) was wiederum auch hier durch die eigene innere Kontaktierung des hierfür eingesetzten erfindungsgemäßen Endkonnektors geschieht, der so die elektrische Verbindung zwischen den Datenleitungen **CAN_H** und **CAN_L** des jeweils aufeinanderfolgenden dritten und zweiten ermöglicht damit die Funktionsfähigkeit des ISOBUS sicherstellt. Ist die Kontaktbelegung (etwa die Pinbelegung oder Kontaktbuchsenbelegung) des ersten **C1** und des dritten **C3** Kabinen-Konnektors des erfindungsgemäßen Kabinen-Konnektorbauteils **C** gleich und sind beide gleichartig, daß heißt also etwa jeweils als Stecke oder als Buchse ausgestaltet, so kann der erfindungsgemäße Endkonnektor **T** sowohl mit dem ersten Kabinen-Konnektor **C1**, als auch dem dritten Kabinen-Konnektor **C3** des erfindungsgemäßen Kabinen-Konnektorbauteils **C** verbunden werden, um dort seine Funktion gemäß der vorliegenden Erfindung zu erfüllen.

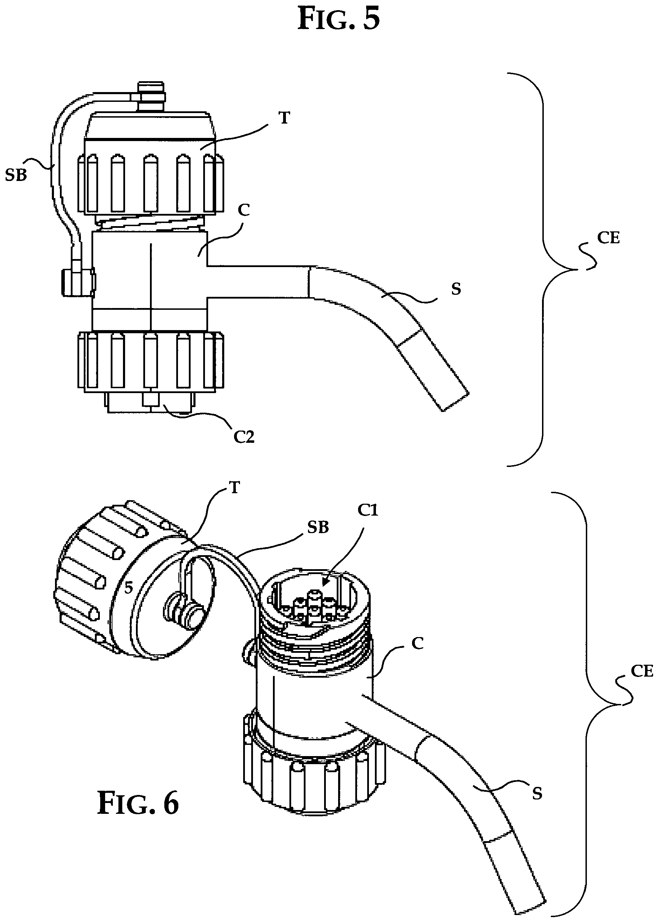

Fig. **5** zeigt ein Konnektorelement **CE**, mit einem erfindungsgemäßen Kabinenkonnektor-Bauteil **C** mit einem als Kappe ausgebildeten verbundenen Endkonnektor **T** nach der vorliegenden Erfindung, sowie einer aus einem flexiblen oder halbflexiblen Kunststoff - vorzugsweise PVC, Polyethylen oder Polyurethan bestehenden - Kupplung **SB**, die die Außenseite des Kabinenkonnektor-Bauteils **C** mit dem Kopf des als Kappe ausgebildeten Endkonnektors **T** lediglich mechanisch verbindet. Die Endkonnektorkappe **T** deckt dabei den am oberen Ende befindlichen und als Stecker ausgebildeten ersten Kabinen-Konnektor ab. Der als Buchse ausgebildete zweite Kabinen-Konnektor des Kabinenkonnektor-Bauteils **C** befindet sich hier am unteren Ende und unterhalb des als Kabel ausgebildeten Abzweigs **S**.

Fig. **6** zeigt das Konnektorelement **CE** nach Fig. **5** mit nicht-verbundenem Endkonnektor nach der vorliegenden Erfindung. Die Endkonnektorkappe **T** ist hier vom Kabinenkonnektor-Bauteil C abgeschraubt und der als Stecker ausgebildete erste Kabinen-Konnektor **C1** daher am oberen Ende des Kabinenkonnektor-Bauteils **C** sichtbar. Der als Buchse ausgebildete zweite Kabinen-Konnektor **C2** des Kabinenkonnektor-Bauteils befindet sich auch hier am unteren Ende und unterhalb des als Kabel ausgebildeten Abzweigs **S**.

Die Kupplung **SB** verbindet die Außenseite des Kabinenkonnektor-Bauteils **C** mit dem Kopf des als Kappe ausgebildeten Endkonnektors **T** lediglich mechanisch. Die Endkonnektorkappe **T** deckt dabei den am oberen Ende befindlichen und als Stecker ausgebildeten ersten Kabinen-Konnektor ab. Der als Buchse ausgebildete zweite Kabinen-Konnektor **C2** des Kabinenkonnektor-Bauteils befindet sich hier am unteren Ende und unterhalb des als Kabel ausgebildeten Abzweigs **S**.

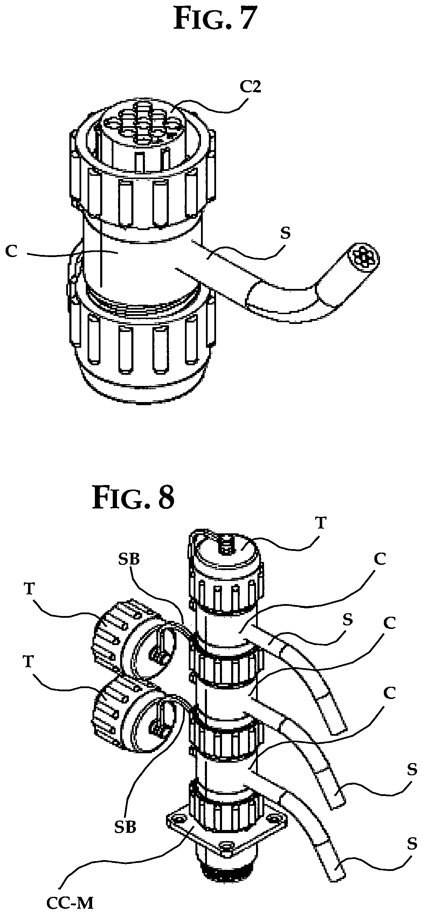

Fig. **7** zeigt das Konnektorelement **CE** nach Fig. **5** und **6****,** nun ohne Endkonnektor und mit dem zweiten Kabinen-Konnektor **C2** des Kabinenkonnektor-Bauteils **C** nach oben gerichtet.

Fig. **8** zeigt drei kaskadierte Kabinenkonnektor-Bauteile **C** mit jeweiligem Abzweig **S** und aufgeschraubter, also mechanisch und elektrisch verbundener Endkonnektorkappe **T** auf dem nach oben gerichteten Kabinenkonnektor-Bauteil **C**. Die übrigen vermittels Kupplungen **SB** lediglich mechanisch mit ihren Kabinenkonnektor-Bauteilen **C** jeweils zu Konnektorelementen verbundenen Endkonnektorkappen **T** sind hier nicht in Funktion; sie werden lediglich in Reserve gehalten, um ggf. als Endkonnektor **T** aufgeschraubt werden zu können. Die Kupplungen **SB** beugen ihrem Verlust insoweit vor. Die gesamte Kaskade der Kabinenkonnektor-Bauteile **C** ist vermittels des nach unten gerichteten Kabinenkonnektor-Bauteils **C** über dessen - hier als Buchse ausgebildeten - zweiten Kabinen-Konnektor mit dem - hier als Stecker ausgebildeten - Konnektor **CC-M** mechanisch und elektrisch verbunden. So entsteht durch das Zusammenwirken der mit dem Konnektor **CC-M** verbundenen erfindungsgemäßen Kabinenkonnektoren-Bauteile **C** und des erfindungsgemäßen - hier als Kappe ausgebildeten - Endkonnektors **T eine** platzsparende und infolge der Kaskadierung wenig Verkabelungsaufwand hervorrufende Anschlußmöglichkeit für eine Vielzahl elektronischer Steuergeräte an den ISOBUS in einer Fahrzeugkabine ohne nennenswerte Einschränkung der Anschlußkabellänge für derartige Geräte.

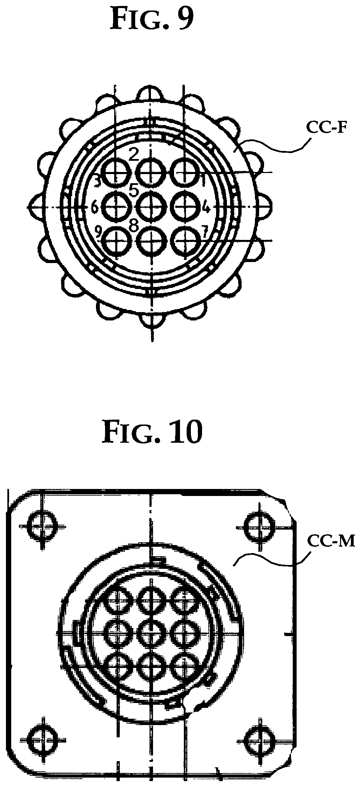

Fig. **9** zeigt einen als Buchse **CC-F** ausgestalteten Konnektor mit Lage und Nummerierung **1, 2, 3, 4, 5, 6, 7, 8** und **9** der jeweiligen Kontakte (Pins) entsprechend dem ISOBUS, und

Fig. **10** einen als Stecker **CC-M** ausgestalteten Konnektor ebenfalls mit der Lage der jeweiligen Kontakte (Pins) enstprechend dem ISOBUS.

Die jeweilige Belegung der Kontakte entsprechend einem Kabinen-Konnektor nach ISO 11783-2, First Edition, Amendment 1, 01.04.2006, dort zu Gliederungspunkt B.11.5) ist dabei die folgende:
- Pin 1:: Elektrische Leitung - **ECU_PWR CON -** zur Übertragung eines - bei Herstellung einer elektrischen Verbindung mit der Stromversorgungsleitung **- ECU_PWR** - für elektronische Steuergeräte zur Schalteransteuerung - vorzugsweise zur Ansteuerung zumindest eines Relais - dienenden Steuersignals;
- Pin 2:: negatives CAN-Datenbus-Differenzsignal - **CAN_L** - am Eingang der Durchleitung (*input*);
- Pin 3:: negatives CAN-Datenbus-Differenzsignal - **CAN**_**L** - am Ausgang der Durchleitung (*outpuf*);
- Pin 4:: positives CAN-Datenbus-Differenzsignal - **CAN**_**H** - am Eingang der Durchleitung (*input*);
- Pin 5:: positives CAN-Datenbus-Differenzsignal - **CAN**_**H** - am Ausgang der Durchleitung (*output*);
- Pin 6:: eine der Stromversorgung für eine automatische Abschlußschaltung dienende Stromversorgungsleitung - **TBC_PWR** -;
- Pin 7:: eine der Stromversorgung des elektronischen Steuergerätes dienende Stromversorgungsleitung - **ECU_PWR** -;
- Pin 8:: eine der zumindest automatischen Abschlußschaltung dienende Masseleitung - **TBC_GND**-; und
- Pin 9:: eine dem elektronischen Steuergerät dienende, - vorzugsweise galvanisch getrennte - Masseleitung - **ECU_GND**-.

## Patentansprüche

1. Kabinen-Konnektorbauteil (**C**) zum Anschluß von ISOBUS-Geräten an einen ISOBUS nach dem Standard ISO 11783, mit
- elektrischen Leitungen (**L1**, **L3** und **L5**) zur Übertragung eines positiven CAN-Datenbus-Differenzsignals (**CAN**_**H**), und
- elektrischen Leitungen (**L2**, **L4** und **L6**) zur Übertragung eines negativen CAN-Datenbus-Differenzsignals (**CAN**_**L**), sowie
- mindestens zwei Kabinen-Konnektoren (**C1**, **C2**) zur jeweiligen elektrischen und mechanischen Verbindung des Kabinen-Konnektorbauteils (**C**) mit einem jeweils passenden Konnektorgegenstück, und **gekennzeichnet durch** einen Abzweig (**S**) zu und von einem elektronischen Steuergerät (**ECU**) oder zu und von einem dritten Kabinen-Konnektor (**C3**) des Kabinen-Konnektorbauteils (**C**),
wobei
die elektrischen Leitungen (**L1**, **L3** und **L5**) zur Übertragung des positiven CAN-Datenbus-Differenzsignals (**CAN**_**H**) und die elektrischen Leitungen (**L2**, **L4** und **L6**) zur Übertragung des negativen CAN-Datenbus-Differenzsignals (**CAN**_**L**) jeweils
- als erste Leitung (**L1**) zur Übertragung des positiven CAN-Datenbus-Differenzsignals (**CAN**_**H**) und als zweite Leitung (**L2**) zur Übertragung des negativen CAN-Datenbus-Differenzsignals (**CAN**_**L**) in einem ersten Abschnitt zwischen dem ersten Kabinen-Konnektor (**C1**) und dem zweiten Kabinen-Konnektor (**C2**), und
- als dritte Leitung (**L3**) zur Übertragung des positiven CAN-Datenbus-Differenzsignals (**CAN_H**) und als vierte Leitung (**L4**) zur Übertragung des negativen CAN-Datenbus-Differenzsignals (**CAN**_**L**) in einem zweiten Abschnitt zwischen dem ersten Kabinen-Konnektor (**C1**) und dem Abzweig (**S**), sowie
- als fünfte Leitung (**L5**) zur Übertragung des positiven CAN-Datenbus-Differenzsignals (**CAN_H**) und als sechste Leitung (**L6**) zur Übertragung des negativen CAN-Datenbus-Differenzsignals (**CAN_L**) in einem dritten Abschnitt zwischen dem Abzweig (**S**) und dem zweiten Kabinen-Konnektor (**C2**)
so vorgesehen sind, daß
die in dem ersten Abschnitt zwischen dem ersten Kabinen-Konnektor (**C1**) und dem zweiten Kabinen-Konnektor (**C2**) verlaufende erste Leitung (**L1**) für das positive CAN-Datenbus-Differenzsignal (**CAN**_**H**) von der in dem zweiten Abschnitt zwischen dem ersten Kabinen-Konnektor (**C1**) und dem Abzweig (**S**) verlaufenden dritten Leitung (**L3**) für das positive CAN-Datenbus-Differenzsignal (**CAN_H**) innerhalb des Kabinen-Konnektorbauteils (**C**) elektrisch getrennt ist, und daß
die in dem ersten Abschnitt zwischen dem ersten Kabinen-Konnektor (**C1**) und dem zweiten Kabinen-Konnektor (**C2**) verlaufende zweite Leitung (**L2**) für das negative CAN-Datenbus-Differenzsignal (**CAN_L**) von der in dem zweiten Abschnitt zwischen dem ersten Kabinen-Konnektor (**C1**) und dem Abzweig (**S**) verlaufenden vierten Leitung (**L4**) für das negative CAN-Datenbus-Differenzsignal (**CAN_L**) innerhalb des Kabinen-Konnektorbauteils (**C**) elektrisch getrennt ist.

2. Kabinen-Konnektorbauteil (**C**) nach Anspruch 1, **dadurch gekennzeichnet, daß**
die mindestens zwei Kabinen-Konnektoren (**C1**, **C2**), eine Vielzahl von Kontakten (**1**, **2**, **3**, **4**, **5**, **6**, **7**, **8** und **9**) zur jeweiligen elektrischen und mechanischen Verbindung des Kabinen-Konnektorbauteils (**C**) mit einem jeweils passenden Konnektorgegenstück aufweisen, wobei elektrische Leitungen im Kabinen-Konnektorbauteil (**C**) zwischen einander jeweils entsprechenden Kontakten des ersten Kabinen-Konnektors (**C1**) und des zweiten Kabinen-Konnektors (**C2**) zur Übertragung elektrischen Stroms - vorzugsweise elektrischer Signale des ISOBUS - vorgesehen sind, und daß
der Abzweig (**S**) das Kabinen-Konnektorbauteil (**C**) zu und von einem elektronischen Steuergerät (**ECU**) oder zu und von dem dritten Kabinen-Konnektor (**C3**) des Kabinen-Konnektorbauteils (**C**) aufweist
- einen ersten Leitungsabzweig (**S1**) vom ersten Kabinen-Konnektor (**C1**) des Kabinen-Konnektorbauteils (**C**) zur elektrischen Verbindung des ersten Kabinen-Konnektors (**C1**) des Kabinen-Konnektorbauteils (**C**) mit dem jeweiligen elektronischen Steuergerät (**ECU**) oder dem dritten Kabinen-Konnektor (**C3**) des Kabinen-Konnektorbauteils (**C**), mit
elektrischen Leitungen (**L3**, **L4**) in dem zweiten Abschnitt zwischen dem ersten Kabinen-Konnektor (**C1**) des Kabinen-Konnektorbauteils (**C**) und dem elektronischen Steuergerät (**ECU**) oder dem dritten Kabinen-Konnektor (**C3**) des Kabinen-Konnektorbauteils (**C**)
zur Übertragung elektrischen Stroms - vorzugsweise elektrischer Signale des ISOBUS - aufweisend
- die dritte - von der ersten elektrischen Leitung zur Übertragung des positiven CAN-Datenbus-Differenzsignals (**L1**) innerhalb des Kabinen-Konnektorbauteils (**C**) elektrisch getrennte - elektrische Leitung (**L3**) zur Übertragung des positiven CAN-Datenbus-Differenzsignals (**CAN**_**H**),
- die vierte - von der zweiten elektrischen Leitung zur Übertragung des positiven CAN-Datenbus-Differenzsignals (**L2**) innerhalb des Kabinen-Konnektorbauteil (**C**) elektrisch getrennte - elektrische Leitung (**L4**) zur Übertragung des negativen CAN-Datenbus-Differenzsignals (**CAN**_**L**),
- und einen zweiten Leitungsabzweig (**S2**) vom dem zweiten Kabinen-Konnektor (**C2**) des Kabinen-Konnektorbauteils (**C**) zur elektrischen Verbindung des zweiten Kabinen-Konnektors (**C2**) des Kabinen-Konnektorbauteils (**C**) mit dem elektronischen Steuergerät (**ECU**) oder dem dritten Kabinen-Konnektor (**C3**) des Kabinen-Konnektorbauteils (**C**), mit
elektrischen Leitungen in dem dritten Abschnitt zwischen dem zweiten Kabinen-Konnektor (**C2**) des Kabinen-Konnektorbauteils (**C**) und dem jeweiligen elektronischen Steuergerät (**ECU**) oder dem dritten Kabinen-Konnektor (**C3**) des Kabinen-Konnektorbauteils (**C**)
zur Übertragung elektrischen Stroms - vorzugsweise elektrischer Signale des ISOBUS - aufweisend
- die fünfte - von der ersten elektrischen Leitung zur Übertragung des positiven CAN-Datenbus-Differenzsignals (**L1**) innerhalb des Kabinen-Konnektorbauteils (**C**) jeweils elektrisch getrennte - elektrische Leitung (**L5**) zur Übertragung des positiven CAN-Datenbus-Differenzsignals (**CAN**_**H**,
- die sechste - von der zweiten elektrischen Leitung zur Übertragung des positiven CAN-Datenbus-Differenzsignals (**L2**) innerhalb des Kabinen-Konnektorbauteils (**C**) jeweils elektrisch getrennte - elektrische Leitung (**L6**) zur Übertragung des negativen CAN-Datenbus-Differenzsignals (**CAN**_**L**).

3. Kabinen-Konnektorbauteil (**C**) nach Anspruch 2, **dadurch gekennzeichnet, daß**
der Abzweig (**S**) unmittelbar über ein Kabel zu und von dem elektronischen Steuergerät (**ECU**) führt. und daß
die fünfte elektrische Leitung (**L5**) zur Übertragung des positiven CAN-Datenbus-Differenzsignals (**CAN**_**H**) innerhalb des Kabinen-Konnektorbauteils (**C**) sowohl von der ersten elektrischen Leitung (**L1**) zur Übertragung des positiven CAN-Datenbus-Differenzsignals (**CAN**_**H**), als auch von der dritten elektrischen Leitung (**L3**) zur Übertragung des positiven CAN-Datenbus-Differenzsignals (**CAN**_**H**) jeweils elektrisch getrennt ist und
die sechste elektrische Leitung (**L6**) zur Übertragung des negativen CAN-Datenbus-Differenzsignals (**CAN**_**L**) innerhalb des Kabinen-Konnektorbauteils (**C**) sowohl von der zweiten elektrischen Leitung (**L2**) zur Übertragung des negativen CAN-Datenbus-Differenzsignals (**CAN**_**L**), als auch von der vierten elektrischen Leitung (**L4**) zur Übertragung des negativen CAN-Datenbus-Differenzsignals (**CAN**_**L**) jeweils elektrisch getrennt ist.

4. Kabinen-Konnektorbauteil (**C**) nach Anspruch 2 oder 3, **dadurch gekennzeichnet, daß**
als elektrische Leitungen im Kabinen-Konnektorbauteil (**C**) zwischen einander jeweils entsprechenden Kontakten des ersten Kabinen-Konnektors (**C1**) und des zweiten Kabinen-Konnektors (**C2**) zur Übertragung elektrischen Stroms - vorzugsweise zur Stromversorgung von elektronischen ISOBUS-Steuergeräten (**ECU**) - auch
- eine, der Stromversorgung des elektronischen Steuergerätes (**ECU**) oder der elektronischen Steuergeräte (**ECU**) dienende, Stromversorgungsleitung (**ECU**_**PWR**), und
- eine, dem elektronischen Steuergerät (**ECU**) oder den elektronischen Steuergeräten (**ECU**) dienende Masseleitung (**ECU**_**GND**)
vorgesehen sind, die über den Abzweig (**S**) des Kabinen-Konnektorbauteils (**C**) jeweils auch mit dem elektronischen Steuergerät (**ECU**) oder dem dritten Kabinen-Konnektor (**C3**) des Kabinen-Konnektorbauteils (**C**) verbunden sind.

5. Kabinen-Konnektorbauteil (**C**) nach Anspruch 4, **dadurch gekennzeichnet, daß**
als elektrische Leitung im Kabinen-Konnektorbauteil (**C**) zwischen einander jeweils entsprechenden Kontakten des ersten Kabinen-Konnektors (**C1**) und des zweiten Kabinen-Konnektors (**C2**) zur Übertragung elektrischen Stroms - vorzugsweise zur Stromversorgung von elektronischen ISOBUS-Steuergeräten (**ECU**) - auch
- eine elektrische Leitung **(ECU_PWR CON**) zur Übertragung eines - bei Herstellung einer elektrischen Verbindung mit der Stromversorgungsleitung (**ECU**_**PWR**) für das elektronische Steuergerät (**ECU**) oder die elektronischen Steuergeräte (**ECU**) - zur Schalteransteuerung - vorzugsweise zur Ansteuerung zumindest eines Relais (**R1**, **R2**) - dienenden Steuersignals,
vorgesehen ist.

6. Kabinen-Konnektorbauteil (**C**) nach Anspruch 5, **dadurch gekennzeichnet, daß** die elektrische Leitung (**ECU**_**PWR CON**) zur Übertragung des - bei Herstellung einer elektrischen Verbindung mit der Stromversorgungsleitung (**ECU_PWR**) für das elektronische Steuergerät (**ECU**) oder die elektronischen Steuergeräte (**ECU**) - zur Schalteransteuerung - vorzugsweise zur Ansteuerung zumindest eines Relais (**R1**, **R2**) - dienenden Steuersignals auch über den Abzweig (**S**) des Kabinen-Konnektorbauteils (**C**) jeweils auch mit dem elektronischen Steuergerät (**ECU**) oder dem dritten Kabinen-Konnektor (**C3**) des Kabinen-Konnektorbauteils (**C**) verbunden ist.

7. Kabinen-Konnektorbauteil (**C**) nach einem der Ansprüche 2 bis 6, **dadurch gekennzeichnet, daß** als elektrische Leitung im Kabinen-Konnektorbauteil (**C**) zwischen einander jeweils entsprechenden Kontakten des ersten Kabinen-Konnektors (**C1**) und des zweiten Kabinen-Konnektors (**C2**) zur Übertragung elektrischen Stroms - vorzugsweise zur Stromversorgung von elektronischen ISOBUS-Steuergeräten (**ECU**) - auch
- eine, der Stromversorgung zumindest einer automatischen Abschlußschaltung dienende, Stromversorgungsleitung **(TBC_PWR)** und
- eine, der zumindest einen automatischen Abschlußschaltung dienende, Masseleitung (**TBC**_**GND**)
vorgesehen sind.

8. Kabinen-Konnektorbauteil (**C**) nach Anspruch 7, **dadurch gekennzeichnet, daß** die, der Stromversorgung zumindest einer automatischen Abschlußschaltung dienende, Stromversorgungsleitung (**TBC_PWR**), und die, der zumindest einen automatischen Abschlußschaltung dienende Masseleitung (**TBC_GND**) auch über den Abzweig (**S**) des Kabinen-Konnektorbauteils (**C**) jeweils auch mit dem elektronischen Steuergerät (**ECU**) oder dem dritten Kabinen-Konnektor (**C3**) des Kabinen-Konnektorbauteils (**C**) verbunden sind.

9. Kabinen-Konnektorbauteil (**C**) nach einem der Ansprüche 1 bis 8, **dadurch gekennzeichnet, daß** der erste Kabinen-Konnektor (**C1**) des Kabinen-Konnektorbauteils (**C**) als Buchse ausgebildet ist.

10. Kabinen-Konnektorbauteil (**C**) nach einem der Ansprüche 1 bis 8, **dadurch gekennzeichnet, daß** der erste Kabinen-Konnektor (**C1**) des Kabinen-Konnektorbauteils (**C**) als Stecker ausgebildet ist.

11. Kabinen-Konnektorbauteil (**C**) nach einem der Ansprüche 1 bis 10, **dadurch gekennzeichnet, daß** der zweite Kabinen-Konnektor (**C2**) des Kabinen-Konnektorbauteils (**C**) als Buchse ausgebildet ist.

12. Kabinen-Konnektorbauteil (**C**) nach einem der Ansprüche 1 bis 10, **dadurch gekennzeichnet, daß** der zweite Kabinen-Konnektor (**C2**) des Kabinen-Konnektorbauteils (**C**) als Stecker ausgebildet ist.

13. Kabinen-Konnektorbauteil (**C**) nach einem der Ansprüche 1 bis 12, **dadurch gekennzeichnet, daß** der Abzweig (**S**) zu und von dem dritten Kabinen-Konnektor (**C3**) des Kabinen-Konnektorbauteils (**C**) führt und dieser als Stecker oder als Buchse ausgebildet ist.

14. Kabinen-Konnektorbauteil (**C**) nach einem der Ansprüche 1 bis 13, **dadurch gekennzeichnet, daß** das Kabinen-Konnektorbauteil (**C**) kaskadierbar ist.

15. Endkonnektor (**T**), passend als Konnektorgegenstück zur elektrischen und mechanischen Verbindung mit dem jeweiligen ersten Kabinen-Konnektor (**C1**) des Kabinen-Konnektorbauteils (**C**) nach einem der Ansprüche 1 bis 14, **dadurch gekennzeichnet, daß** der Endkonnektor (**T**), wenn er mit dem jeweiligen ersten Kabinen-Konnektor (**C1**) des Kabinen-Konnektorbauteils (**C**) nach einem der Ansprüche 1 bis 14 verbunden ist, eine elektrische Verbindung sowohl zwischen
der in dem ersten Abschnitt zwischen dem ersten Kabinen-Konnektor (**C1**) und dem zweiten Kabinen-Konnektor (**C2**) verlaufenden ersten Leitung (**L1**) für das positive CAN-Datenbus-Differenzsignal (**CAN**_**H**) und
der in dem zweiten Abschnitt zwischen dem ersten Kabinen-Konnektor (**C1**) und dem Abzweig (**S**) verlaufenden dritten Leitung (**L3**) für das positive CAN-Datenbus-Differenzsignal (**CAN**_**H**),
als auch
der in dem ersten Abschnitt zwischen dem ersten Kabinen-Konnektor (**C1**) und dem zweiten Kabinen-Konnektor (**C2**) verlaufenden zweiten Leitung (**L2**) für das negative CAN-Datenbus-Differenzsignal (**CAN**_**L**) und
der in dem zweiten Abschnitt zwischen dem ersten Kabinen-Konnektor (**C1**) und dem Abzweig (**S**) verlaufenden vierten Leitung (**L4**) für das negative CAN-Datenbus-Differenzsignal (**CAN**_**L**)
herstellt.

16. Endkonnektor (**T**), passend als Konnektorgegenstück zur elektrischen und mechanischen Verbindung mit dem jeweiligen dritten Kabinen-Konnektor (**C3**) des Kabinen-Konnektorbauteils (**C**) nach einem der Ansprüche 1 bis 14, **dadurch gekennzeichnet, daß** der Endkonnektor (**T**), wenn er mit dem jeweiligen dritten Kabinen-Konnektor (**C3**) des Kabinen-Konnektorbauteils (**C**) nach einem der Ansprüche 1 bis 14 verbunden ist, eine elektrische Verbindung sowohl zwischen
der in dem dritten Abschnitt zwischen dem dritten Kabinen-Konnektor (**C3**) und dem zweiten Kabinen-Konnektor (**C2**) verlaufenden fünften Leitung (**L5**) für das positive CAN-Datenbus-Differenzsignal (**CAN**_**H**) und
der in dem zweiten Abschnitt zwischen dem ersten Kabinen-Konnektor (**C1**) und dem dritten Kabinen-Konnektor (**C3**) verlaufenden dritten Leitung (**L3**) für das positive CAN-Datenbus-Differenzsignal (**CAN**_**H**),
als auch
der in dem dritten Abschnitt zwischen dem dritten Kabinen-Konnektor (**C3**) und dem zweiten Kabinen-Konnektor (**C2**) verlaufenden sechsten Leitung (**L6**) für das negative CAN-Datenbus-Differenzsignal (**CAN**_**L**) und
der in dem zweiten Abschnitt zwischen dem ersten Kabinen-Konnektor (**C1**) und dem dritten Kabinen-Konnektor (**C3**) verlaufenden vierten Leitung (**L4**) für das negative CAN-Datenbus-Differenzsignal (**CAN**_**L**)
herstellt.

17. Endkonnektor (**T**) nach Anspruch 15 oder 16, **dadurch gekennzeichnet, daß** der Endkonnekor (**T**) als Kappe in Gestalt einer Buchse oder eines Steckers ausgebildet ist.

18. Konnektorelement (**CE**), **dadurch gekennzeichnet, daß** es
- ein Kabinenkonnektor-Bauteil (**C**) nach einem der Ansprüche 1 bis 14,
- mindestens einen Endkonnektor (**T**) nach einem der Ansprüche 15, 16 oder 17, und
- mindestens eine Kupplung (**SB**) aufweist, die das Kabinenkonnektor-Bauteil (**C**) mit mindestens einem Endkonnektor (**T**) mechanisch verbindet.

19. Konnektorelement (**CE**) nach Anspruch 18, **dadurch gekennzeichnet, daß** die Kupplung (**SB**) als Halter ausgestaltet ist.

20. Konnektorelement (**CE**) nach Anspruch 18 oder 19, **dadurch gekennzeichnet, daß** die Kupplung aus einem flexiblen oder halbflexiblen Kunsstoff - vorzugsweise PVC, Polyethylen oder Polyurethan - besteht.

21. Konnektorelement (**CE**) nach einem der Ansprüche 18 bis 20, soweit diese auf Anspruch 17 rückbezogen sind, **dadurch gekennzeichnet, daß** die Kupplung (**SB**) an einer Seite an dem Endkonnektor (**T**) an der Außenseite der dortigen Kappe und an der anderen Seite an der Außenseite des Kabinenkonnektor-Bauteils (**C**) befestigt ist.

22. Konnektorelement (**CE**) nach Anspruch 21, **dadurch gekennzeichnet, daß** die Kupplung (**SB**) an einer Seite an dem Endkonnektor (**T**) am Kopf der dortigen Kappe befestigt ist.

## Claims

1. Cabin connector component (**C**) for connecting ISOBUS devices to an ISOBUS based on the ISO 11783 standard, with
- electrical lines (**L1**, **L3** and **L5**) for transmitting a positive CAN data bus difference signal (**CAN_H**), and
- electrical lines (**L2**, **L4** and **L6**) for transmitting a negative CAN data bus difference signal (**CAN**_**L**), and also
- at least two cabin connectors (**C1**, **C2**) for respective electrical and mechanical connection of the cabin connector component (**C**) to a respectively matching connector counterpart, and
**characterized by** a branch (**S**) to and from an electronic controller (**ECU**) or to and from a third cabin connector (**C3**) of the cabin connector component (**C**) wherein
the electrical lines (**L1**, **L3** and **L5**) for transmitting the positive CAN data bus difference signal (**CAN**_**H**) and the electrical lines (**L2**, **L4** and **L6**) for transmitting the negative CAN data bus difference signal (**CAN_L**) are respectively provided
- as a first line (**L1**) for transmitting the positive CAN data bus difference signal (**CAN_H**) and as a second line (**L2**) for transmitting the negative CAN data bus difference signal (**CAN_L**) in a first section between the first cabin connector (**C1**) and the second cabin connector (**C2**), and
- as a third line (**L3**) for transmitting the positive CAN data bus difference signal (**CAN_H**) and as a fourth line (**L4**) for transmitting the negative CAN data bus difference signal (**CAN_L**) in a second section between the first cabin connector (**C1**) and the branch (**S**), and also
- as a fifth line (**L5**) for transmitting the positive CAN data bus difference signal (**CAN**_**H**) and as a sixth line (**L6**) for transmitting the negative CAN data bus difference signal (**CAN_L**) in a third section between the branch (**S**) and the second cabin connector (**C2**)
such that
the first line (**L1**), running in the first section between the first cabin connector (**C1**) and the second cabin connector (**C2**), for the positive CAN data bus difference signal (**CAN**_**H**) is electrically isolated, within the cabin connector component (**C**), from the third line (**L3**), running in the second section between the first cabin connector (**C1**) and the branch (**S**), for the positive CAN data bus difference signal (**CAN_H**), and that
the second line (**L2**), running in the first section between the first cabin connector (**C1**) and the second cabin connector (**C2**), for the negative CAN data bus difference signal (**CAN_L**) is electrically isolated, within the cabin connector component (**C**), from the fourth line (**L4**), running in the second section between the first cabin connector (**C1**) and the branch (**S**), for the negative CAN data bus difference signal (**CAN**_**L**).

2. Cabin connector component (**C**) according to Claim 1, **characterized in that**
the at least two cabin connectors (**C1**, **C2**) have a multiplicity of contacts (**1**, **2**, **3**, **4**, **5**, **6**, **7**, **8** and **9**) for respective electrical and mechanical connection of the cabin connector component (**C**) to a respectively matching connector counterpart, wherein electrical lines are provided in the cabin connector component (**C**) between respectively corresponding contacts of the first cabin connector (**C1**) and the second cabin connector (**C2**) for the purpose of transmitting electric current - preferably electrical signals of the ISOBUS -, and that
the branch (**S**) of the cabin connector component (**C**) to and from an electronic controller (**ECU**) or to and from the third cabin connector (**C3**) of the cabin connector component (**C**) has
- a first line branch (**S1**) from the first cabin connector (**C1**) of the cabin connector component (**C**) for the purpose of electrically connecting the first cabin connector (**C1**) of the cabin connector component (**C**) to the respective electronic controller (**ECU**) or to the third cabin connector (**C3**) of the cabin connector component (**C**), with electrical lines (**L3**, **L4**) in the second section between the first cabin connector (**C1**) of the cabin connector component (**C**) and the electronic controller (**ECU**) or the third cabin connector (**C3**) of the cabin connector component (**C**)
for the purpose of transmitting electric current - preferably electrical signals of the ISOBUS - having
- the third electrical line (**L3**) - electrically isolated, within the cabin connector component (**C**), from the first electrical line for transmitting the positive CAN data bus difference signal (**L1**) - for transmitting the positive CAN data bus difference signal (**CAN_H**),
- the fourth electrical line (**L4**) - electrically isolated, within the cabin connector component (**C**), from the second electrical line for transmitting the positive CAN data bus difference signal (**L2**) - for transmitting the negative CAN data bus difference signal (**CAN_L)**,
- and a second line branch (**S2**) from the second cabin connector (**C2**) of the cabin connector component (**C**) for the purpose of electrically connecting the second cabin connector (**C2**) of the cabin connector component (**C**) to the electronic controller (**ECU**) or to the third cabin connector (**C3**) of the cabin connector component (**C**), with electrical lines in the third section between the second cabin connector (**C2**) of the cabin connector component (**C**) and the respective electronic controller (**ECU**) or the third cabin connector (**C3**) of the cabin connector component (**C**)
for the purpose of transmitting electric current - preferably electrical signals of the ISOBUS - having
- the fifth electrical line (**L5**) - in each case electrically isolated, within the cabin connector component (**C**), from the first electrical line for transmitting the positive CAN data bus difference signal (**L1**) - for transmitting the positive CAN data bus difference signal (**CAN_H**),
- the sixth electrical line (**L6**) - in each case electrically isolated, within the cabin connector component (**C**), from the second electrical line for transmitting the positive CAN data bus difference signal (**L2**) - for transmitting the negative CAN data bus difference signal (**CAN**_**L**).

3. Cabin connector component (**C**) according to Claim 2, **characterized in that**
the branch (**S**) is routed directly by means of a cable to and from the electronic controller (**ECU**) and **in that** the fifth electrical line (**L5**) for transmitting the positive CAN data bus difference signal (**CAN**_**H**) is in each case electrically isolated, within the cabin connector component (**C**), both from the first electrical line (**L1**) for transmitting the positive CAN data bus difference signal (**CAN**_**H**) and from the third electrical line (**L3**) for transmitting the positive CAN data bus difference signal (**CAN**_**H**) and
the sixth electrical line (**L6**) for transmitting the negative CAN data bus difference signal (**CAN_L**) is in each case electrically isolated, within the cabin connector component (**C**), both from the second electrical line (**L2**) for transmitting the negative CAN data bus difference signal (**CAN_L**) and from the fourth electrical line (**L4**) for transmitting the negative CAN data bus difference signal (**CAN**_**L**).

4. Cabin connector component (**C**) according to Claim 2 or 3, **characterized in that**
the electrical lines provided in the cabin connector component (**C**) between respectively corresponding contacts of the first cabin connector (**C1**) and the second cabin connector (**C2**) for the purpose of transmitting electric current - preferably for supplying power to electronic ISOBUS controllers (**ECU**) - are also
- a power supply line (**ECU**_**PWR**) used for supplying power to the electronic controller (**ECU**) or the electronic controllers (**ECU**), and
- an earth line (**ECU**_**GND**) used for the electronic controller (**ECU**) or the electronic controllers (**ECU**),
said power supply line and earth line each also being connected to the electronic controller (**ECU**) or the third cabin connector (**C3**) of the cabin connector component (**C**) via the branch (**S**) of the cabin connector component (**C**).

5. Cabin connector component (**C**) according to Claim 4, **characterized in that**
the electrical line provided in the cabin connector component (**C**) between respectively corresponding contacts of the first cabin connector (**C1**) and the second cabin connector (**C2**) for the purpose of transmitting electric current - preferably for supplying power to electronic ISOBUS controllers (**ECU**) - is also
- an electrical line (**ECU**_**PWR CON**) for transmitting a control signal - used when setting up an electrical connection to the power supply line (**ECU_PWR**) for the electronic controller (**ECU**) or the electronic controllers (**ECU**) - for the purpose of switch actuation - preferably for the purpose of actuating at least one relay (**R1**, **R2**).

6. Cabin connector component (**C**) according to Claim 5, **characterized in that** the electrical line (**ECU**_**PWR CON**) for transmitting the control signal used - when setting up an electrical connection to the power supply line (**ECU_PWR**) for the electronic controller (**ECU**) or the electronic controllers (**ECU**) - for the purpose of switch actuation - preferably for the purpose of actuating at least one relay (**R1**, **R2**) - is in each case also connected to the electronic controller (**ECU**) or the third cabin connector (**C3**) of the cabin connector component (**C**) also via the branch (**S**) of the cabin connector component (**C**).

7. Cabin connector component (**C**) according to one of Claims 2 to 6, **characterized in that** the electrical line provided in the cabin connector component (**C**) between respectively corresponding contacts of the first cabin connector (**C1**) and the second cabin connector (**C2**) for the purpose of transmitting electric current - preferably for supplying power to electronic ISOBUS controllers (**ECU**) - is also
- a power supply line (**TBC_PWR**) used for supplying power to at least one automatic termination circuit, and
- an earth line (**TBC_GND**) used for the at least one automatic termination circuit.

8. Cabin connector component (**C**) according to Claim 7, **characterized in that** the power supply line (**TBC_PWR**), used for supplying power to at least one automatic termination circuit, and the earth line (**TBC_GND**), used for the at least one automatic termination circuit, are in each case also connected to the electronic controller (**ECU**) or the third cabin connector (**C3**) of the cabin connector component (**C**) also via the branch (**S**) of the cabin connector component (**C**).

9. Cabin connector component (**C**) according to one of Claims 1 to 8, **characterized in that** the first cabin connector (**C1**) of the cabin connector component (**C**) is in the form of a socket.

10. Cabin connector component (**C**) according to one of Claims 1 to 8, **characterized in that** the first cabin connector (**C1**) of the cabin connector component (**C**) is in the form of a plug.

11. Cabin connector component (**C**) according to one of Claims 1 to 10, **characterized in that** the second cabin connector (**C2**) of the cabin connector component (**C**) is in the form of a socket.

12. Cabin connector component (**C**) according to one of Claims 1 to 10, **characterized in that** the second cabin connector (**C2**) of the cabin connector component (**C**) is in the form of a plug.

13. Cabin connector component (**C**) according to one of Claims 1 to 12, **characterized in that** the branch (**S**) is routed to and from the third cabin connector (**C3**) of the cabin connector component (**C**), and the latter is in the form of a plug or in the form of a socket.

14. Cabin connector component (**C**) according to one of Claims 1 to 13, **characterized in that** the cabin connector component (**C**) is cascadable.

15. Terminal connector (**T**), suitable as a connector counterpart for electrical and mechanical connection to the respective first cabin connector (**C1**) of the cabin connector component (**C**) according to one of Claims 1 to 14, **characterized in that** the terminal connector (**T**), when connected to the respective first cabin connector (**C1**) of the cabin connector component (**C**) according to one of Claims 1 to 14, sets up an electrical connection both between
the first line (**L1**), running in the first section between the first cabin connector (**C1**) and the second cabin connector (**C2**), for the positive CAN data bus difference signal (**CAN**_**H**) and
the third line (**L3**), running in the second section between the first cabin connector (**C1**) and the branch (**S**), for the positive CAN data bus difference signal **CAN_H**),
and between
the second line (**L2**), running in the first section between the first cabin connector (**C1**) and the second cabin connector (**C2**), for the negative CAN data bus difference signal (**CAN_L**) and
the fourth line (**L4**), running in the second section between the first cabin connector (**C1**) and the branch (**S**), for the negative CAN data bus difference signal (**CAN**_**L**).

16. Terminal connector (**T**), suitable as a connector counterpart for electrical and mechanical connection to the respective third cabin connector (**C3**) of the cabin connector component (**C**) according to one of Claims 1 to 14, **characterized in that** the terminal connector (**T**), when connected to the respective third cabin connector (**C3**) of the cabin connector component (**C**) according to one of Claims 1 to 14, sets up an electrical connection both between
the fifth line (**L5**), running in the third section between the third cabin connector (**C3**) and the second cabin connector (**C2**), for the positive CAN data bus difference signal (**CAN**_**H**) and
the third line (**L3**), running in the second section between the first cabin connector (**C1**) and the third cabin connector (**C3**), for the positive CAN data bus difference signal (**CAN_H**),
and between
the sixth line (**L6**), running in the third section between the third cabin connector (**C3**) and the second cabin connector (**C2**), for the negative CAN data bus difference signal (**CAN_L**) and
the fourth line (**L4**), running in the second section between the first cabin connector (**C1**) and the third cabin connector (**C3**), for the negative CAN data bus difference signal (**CAN**_**L**).

17. Terminal connector (**T**) according to Claim 15 or 16, **characterized in that** the terminal connector (**T**) is in the form of a cap in the shape of a socket or a plug.

18. Connector element (**CE**), **characterized in that** it has
- a cabin connector component (**C**) according to one of Claims 1 to 14,
- at least one terminal connector (**T**) according to one of Claims 15, 16 and 17, and
- at least one coupling (**SB**) that mechanically connects the cabin connector component (**C**) to at least one terminal connector (**T**).

19. Connector element (**CE**) according to Claim 18, **characterized in that** the coupling (**SB**) is embodied as a retainer.

20. Connector element (**CE**) according to Claim 18 or 19, **characterized in that** the coupling consists of a flexible or semiflexible plastic - preferably PVC, polyethylene or polyurethane.

21. Connector element (**CE**) according to one of Claims 18 to 20, in so far as these refer back to Claim 17, **characterized in that** the coupling (**SB**) has one end attached to the terminal connector (**T**) on the outside of the cap there and has the other end attached to the outside of the cabin connector component (**C**).

22. Connector element (**CE**) according to Claim 21, **characterized in that** the coupling (**SB**) has one end attached to the terminal connector (**T**) on the head of the cap there.

## Revendications

1. Composant connecteur de cabine (C) destiné au raccordement d'appareils ISOBUS à un ISOBUS selon la norme ISO 11783, comprenant
- des lignes électriques (L1, L3 et L5) destinées à la transmission d'un signal différentiel de bus de données CAN positif (CAN_H), et
- des lignes électriques (L2, L4 et L6) destinées à la transmission d'un signal différentiel de bus de données CAN négatif (CAN_L), et
- au moins deux connecteurs de cabine (C1, C2) destinés à la liaison électrique et mécanique correspondante du composant connecteur de cabine (C) avec un connecteur homologue correspondant respectif, et
**caractérisé par** une dérivation (S) vers et depuis un contrôleur électronique (ECU) ou vers et depuis un troisième connecteur de cabine (C3) du composant connecteur de cabine (C),
les lignes électriques (L1, L3 et L5) destinées à la transmission d'un signal différentiel de bus de données CAN positif (CAN_H), et les lignes électriques (L2, L4 et L6) destinées à la transmission d'un signal différentiel de bus de données CAN négatif (CAN_L) étant respectivement conçues
- en tant que première ligne (L1) destinée à la transmission du signal différentiel de bus de données CAN positif (CAN_H) et en tant que deuxième ligne (L2) destinée à la transmission du signal différentiel de bus de données CAN négatif (CAN_L) dans une première portion entre le premier connecteur de cabine (C1) et le deuxième connecteur de cabine (C2), et
- en tant que troisième ligne (L3) destinée à la transmission, du signal différentiel de bus de données CAN positif (CAN_H) et en tant que quatrième ligne (L4) destinée à la transmission du signal différentiel de bus de données CAN négatif (CAN_L) dans une deuxième portion entre le premier connecteur de cabine (C1) et la dérivation (S), et
- en tant que cinquième ligne (L5) destinée à la transmission du signal différentiel de bus de données CAN positif (CAN_H) et en tant que sixième ligne (L6) destinée à la transmission du signal différentiel de bus de données CAN négatif (CAN_L) dans une troisième portion entre la dérivation (S) et le deuxième connecteur de cabine (C2),
de sorte que
la première ligne (L1) pour le signal différentiel de bus de données CAN positif (CAN_H) qui s'étend dans la première portion entre le premier connecteur de cabine (C1) et le deuxième connecteur de cabine (C2) est séparée électriquement à l'intérieur du composant connecteur de cabine (C) de la troisième ligne (L3) pour le signal différentiel de bus de données CAN positif (CAN_H) qui s'étend dans la deuxième portion entre le premier connecteur de cabine (C1) et la dérivation (S), et que
la deuxième ligne (L2) pour le signal différentiel de bus de données CAN négatif (CAN_L) qui s'étend dans la première portion entre le premier connecteur de cabine (C1) et le deuxième connecteur de cabine (C2) est séparée électriquement à l'intérieur du composant connecteur de cabine (C) de la quatrième ligne (L4) pour le signal différentiel de bus de données CAN négatif (CAN_L) qui s'étend dans la deuxième portion entre le premier connecteur de cabine (C1) et la dérivation (S).

2. Composant connecteur de cabine (C) selon la revendication 1, **caractérisé en ce que** les au moins deux connecteurs de cabine (C1, C2) possèdent une pluralité de contacts (1, 2, 3, 4, 5, 6, 7, 8 et 9) destinés à la liaison électrique et mécanique correspondante du composant connecteur de cabine (C) avec un connecteur homologue correspondant respectif, des lignes électriques dans le composant connecteur de cabine (C) entre des contacts correspondant respectivement les uns aux autres du premier connecteur de cabine (C1) et du deuxième connecteur de cabine (C2) étant conçues pour la transmission de courant électrique, de préférence de signaux électriques de l'ISOBUS, et **en ce que**
la dérivation (S) du composant connecteur de cabine (C) vers et depuis un contrôleur électronique (ECU) ou vers et depuis un troisième connecteur de cabine (C3) du composant connecteur de cabine (C) possède
- une première dérivation de ligne (S1) du premier connecteur de cabine (C1) du composant connecteur de cabine (C) vers la liaison électrique du premier connecteur de cabine (C1) du composant connecteur de cabine (C) avec le contrôleur électronique (ECU) correspondant ou le troisième connecteur de cabine (C3) du composant connecteur de cabine (C), avec
des lignes électriques (L3, L4) dans la deuxième portion entre le premier connecteur de cabine (C1) du composant connecteur de cabine (C) et le contrôleur électronique (ECU) ou le troisième connecteur de cabine (C3) du composant connecteur de cabine (C),
pour la transmission de courant électrique, de préférence de signaux électriques de l'ISOBUS, possédant
- la troisième ligne électrique (L3) - séparée électriquement à l'intérieur du composant connecteur de cabine (C) de la première ligne électrique pour la transmission du signal différentiel de bus de données CAN positif (L1) - destinée à la transmission du signal différentiel de bus de données CAN positif (CAN_H),
- la quatrième ligne électrique (L4) - séparée électriquement à l'intérieur du composant connecteur de cabine (C) de la deuxième ligne électrique pour le signal différentiel de bus de données CAN positif (L2)
- destinée à la transmission du signal différentiel de bus de données CAN négatif (CAN_L),
- et une deuxième dérivation de ligne (S2) du deuxième connecteur de cabine (C2) du composant connecteur de cabine (C) vers la liaison électrique du deuxième connecteur de cabine (C2) du composant connecteur de cabine (C) avec le contrôleur électronique (ECU) ou le troisième connecteur de cabine (C3) du composant connecteur de cabine (C), avec
des lignes électriques dans la troisième portion entre le deuxième connecteur de cabine (C2) du composant connecteur de cabine (C) et le contrôleur électronique (ECU) correspondant ou le troisième connecteur de cabine (C3) du composant connecteur de cabine (C),
pour la transmission de courant électrique, de préférence de signaux électriques de l'ISOBUS, possédant
- la cinquième ligne électrique (L5) - à chaque fois séparée électriquement à l'intérieur du composant connecteur de cabine (C) de la première ligne électrique pour la transmission du signal différentiel de bus de données CAN positif (L1) - destinée à la transmission du signal différentiel de bus de données CAN positif (CAN_H),
- la sixième ligne électrique (L6) - à chaque fois séparée électriquement à l'intérieur du composant connecteur de cabine (C) de la deuxième ligne électrique pour la transmission du signal différentiel de bus de données CAN positif (L2) - destinée à la transmission du signal différentiel de bus de données CAN négatif (CAN_L).

3. Composant connecteur de cabine (C) selon la revendication 2, **caractérisé en ce que**
la dérivation (S) mène vers et depuis le contrôleur électronique (ECU) directement par le biais d'un câble et **en ce que**
la cinquième ligne électrique (L5) destinée à la transmission du signal différentiel de bus de données CAN positif (CAN_H) à l'intérieur du composant connecteur de cabine (C) est à chaque fois séparée électriquement à la fois de la première ligne électrique (L1) destinée à la transmission du signal différentiel de bus de données CAN positif (CAN_H) et de la troisième ligne électrique (L3) destinée à la transmission du signal différentiel de bus de données CAN positif (CAN_H) et
la sixième ligne électrique (L6) destinée à la transmission du signal différentiel de bus de données CAN négatif (CAN_L) à l'intérieur du composant connecteur de cabine (C) est à chaque fois séparée électriquement à la fois de la deuxième ligne électrique (L2) destinée à la transmission du signal différentiel de bus de données CAN négatif (CAN_L) et de la quatrième ligne électrique (L4) destinée à la transmission du signal différentiel de bus de données CAN négatif (CAN_L).

4. Composant connecteur de cabine (C) selon la revendication 2 ou 3, **caractérisé en ce que** les lignes électriques présentes dans le composant connecteur de cabine (C) entre des contacts correspondant respectivement les uns aux autres du premier connecteur de cabine (C1) et du deuxième connecteur de cabine (C2) pour la transmission de courant électrique, de préférence pour l'alimentation électrique de contrôleurs ISOBUS électroniques (ECU), sont également
- une ligne d'alimentation électrique (ECU_PWR) servant à l'alimentation électrique du contrôleur électronique (ECU) ou des contrôleurs électroniques (ECU), et
- une ligne de masse (ECU_GND) servant au contrôleur électronique (ECU) ou aux contrôleurs électroniques (ECU),
lesquelles sont également reliées respectivement, par le biais de la dérivation (S) du composant connecteur de cabine (C), au contrôleur électronique (ECU) ou au troisième connecteur de cabine (C3) du composant connecteur de cabine (C).

5. Composant connecteur de cabine (C) selon la revendication 4, **caractérisé en ce que**
la ligne électrique présente dans le composant connecteur de cabine (C) entre des contacts correspondant respectivement les uns aux autres du premier connecteur de cabine (C1) et du deuxième connecteur de cabine (C2) pour la transmission de courant électrique, de préférence pour l'alimentation électrique des contrôleurs ISOBUS. électroniques (ECU), est également
- une ligne électrique (ECU_PWR CON) destinée à la transmission d'un signal de commande servant la commande de commutation - de préférence à l'excitation d'au moins un relais (R1, R2) - lors de l'établissement d'une liaison électrique avec la ligne d'alimentation électrique (ECU_PWR) pour le contrôleur électronique (ECU) ou les contrôleurs électroniques (ECU).

6. Composant connecteur de cabine (C) selon la revendication 5, **caractérisé en ce que** la ligne électrique (ECU_PWR CON) destinée à la transmission du signal de commande servant à la commande de commutation - de préférence à l'excitation d'au moins un relais (R1, R2) - lors de l'établissement d'une liaison électrique avec la ligne d'alimentation électrique (ECU_PWR) pour le contrôleur électronique (ECU) ou les contrôleurs électroniques (ECU) est également reliée par le biais de la dérivation (S) du composant connecteur de cabine (C) respectivement au contrôleur électronique (ECU) ou au troisième connecteur de cabine (C3) du composant connecteur de cabine (C).

7. Composant connecteur de cabine (C) selon l'une des revendications 2 à 6, **caractérisé en ce que** la ligne électrique dans le composant connecteur de cabine (C) entre des contacts correspondant respectivement les uns aux autres du premier connecteur de cabine (C1) et du deuxième connecteur de cabine (C2) pour la transmission de courant électrique, de préférence pour l'alimentation électrique de contrôleurs ISOBUS électroniques (ECU), est également
- une ligne d'alimentation électrique (TBC_PWR) servant à l'alimentation électrique d'au moins un circuit de terminaison automatique et
- une ligne de masse (TBC_GND) servant à l'au moins un circuit de terminaison automatique.

8. Composant connecteur de cabine (C) selon la revendication 7, **caractérisé en ce que** la ligne d'alimentation électrique (TBC_PWR) servant à l'alimentation électrique d'au moins un circuit de terminaison automatique et la ligne de masse (TBC_GND) servant à l'au moins un circuit de terminaison automatique sont également reliées respectivement par le biais de la dérivation (S) du composant connecteur de cabine (C) au contrôleur électronique (ECU) ou au troisième connecteur de cabine (C3) du composant connecteur de cabine (C).

9. Composant connecteur de cabine (C) selon l'une des revendications 1 à 8, **caractérisé en ce que** le premier connecteur de cabine (C1) du composant connecteur de cabine (C) est réalisé sous la forme d'une douille.

10. Composant connecteur de cabine (C) selon l'une des revendications 1 à 8, **caractérisé en ce que** le premier connecteur de cabine (C1) du composant connecteur de cabine (C) est réalisé sous la forme d'une fiche.

11. Composant connecteur de cabine (C) selon l'une des revendications 1 à 10, **caractérisé en ce que** le deuxième connecteur de cabine (C2) du composant connecteur de cabine (C) est réalisé sous la forme d'une douille.

12. Composant connecteur de cabine (C) selon l'une des revendications 1 à 10, **caractérisé en ce que** le deuxième connecteur de cabine (C2) du composant connecteur de cabine (C) est réalisé sous la forme d'une fiche.

13. Composant connecteur de cabine (C) selon l'une des revendications 1 à 12, **caractérisé en ce que** la dérivation (S) mène vers et depuis le troisième connecteur de cabine (C3) du composant connecteur de cabine (C) et celui-ci est réalisé sous la forme d'une fiche ou d'une douille.

14. Composant connecteur de cabine (C) selon l'une des revendications 1 à 13, **caractérisé en ce que** le composant connecteur de cabine (C) peut être monté en cascade.

15. Connecteur final (T), adapté en tant que connecteur homologue destiné à la liaison électrique et mécanique avec le premier connecteur de cabine (C1) respectif du composant connecteur de cabine (C) selon l'une des revendications 1 à 14, **caractérisé en ce que** le connecteur final (T), lorsqu'il est relié avec le premier connecteur de cabine (C1) respectif du composant connecteur de cabine (C) selon l'une des revendications 1 à 14, établit une liaison électrique à la fois entre
la première ligne (L1) pour le signal différentiel de bus de données CAN positif (CAN_H) qui s'étend dans la première portion entre le premier connecteur de cabine (C1) et le deuxième connecteur de cabine (C2) et
la troisième ligne (L3) pour le signal différentiel de bus de données CAN positif (CAN_H) qui s'étend dans la deuxième portion entre le premier connecteur de cabine (C1) et la dérivation (S)
et aussi entre
la deuxième ligne (L2) pour le signal différentiel de bus de données CAN négatif (CAN_L) qui s'étend dans la première portion entre le premier connecteur de cabine (C1) et le deuxième connecteur de cabine (C2) et
la quatrième ligne (L4) pour le signal différentiel de bus de données CAN négatif (CAN_L) qui s'étend dans la deuxième portion entre le premier connecteur de cabine (C1) et la dérivation (S).

16. Connecteur final (T), adapté en tant que connecteur homologue destiné à la liaison électrique et mécanique avec le troisième connecteur de cabine (C3) respectif du composant connecteur de cabine (C) selon l'une des revendications 1 à 14, **caractérisé en ce que** le connecteur final (T), lorsqu'il est relié avec le troisième connecteur de cabine (C3) respectif du composant connecteur de cabine (C) selon l'une des revendications 1 à 14, établit une liaison électrique à la fois entre
la cinquième ligne (L5) pour le signal différentiel de bus de données CAN positif (CAN_H) qui s'étend dans la troisième portion entre le troisième connecteur de cabine (C3) et le deuxième connecteur de cabine (C2) et la troisième ligne (L3) pour le signal différentiel de bus de données CAN positif (CAN_H) qui s'étend dans la deuxième portion entre le premier connecteur de cabine (C1) et le troisième connecteur de cabine (C3) et aussi entre
la sixième ligne (L6) pour le signal différentiel de bus de données CAN négatif (CAN_L) qui s'étend dans la troisième portion entre le troisième connecteur de cabine (C3) et le deuxième connecteur de cabine (C2) et la quatrième ligne (L4) pour le signal différentiel de bus de données CAN négatif (CAN_L) qui s'étend dans la deuxième portion entre le premier connecteur de cabine (C1) et le troisième connecteur de cabine (C3).

17. Connecteur final (T) selon la revendication 15 ou 16, **caractérisé en ce que** le connecteur final (T) présente la configuration d'un capuchon sous la forme d'une douille ou d'une fiche.

18. Élément connecteur (CE), **caractérisé en ce qu'**il possède
- un composant connecteur de cabine (C) selon l'une des revendications 1 à 14,
- au moins un connecteur final (T) selon l'une des revendications 15, 16 ou 17, et
- au moins un coupleur (SB) qui relie mécaniquement le composant connecteur de cabine (C) avec l'au moins un connecteur final (T).

19. Élément connecteur (CE) selon la revendication 18, **caractérisé en ce que** le coupleur (SB) présente la configuration d'un élément de maintien.

20. Élément connecteur (CE) selon la revendication 18 ou 19, **caractérisé en ce que** le coupleur se compose d'une matière plastique souple ou semi-souple, de préférence du PVC, du polyéthylène ou du polyuréthane.

21. Élément connecteur (CE) selon l'une des revendications 18 à 20, dans la mesure où celles-ci se réfèrent à la revendication 17, **caractérisé en ce que** le coupleur (SB) est fixé par un côté au connecteur final (T) au niveau du côté extérieur du capuchon qui s'y trouve et par l'autre côté au niveau du côté extérieur du composant connecteur de cabine (C).

22. Élément connecteur (CE) selon la revendication 21, **caractérisé en ce que** le coupleur (SB) est fixé par un côté au connecteur final (T) à la tête du capuchon qui s'y trouve.
